# EUROPEAN PATENT APPLICATION

(11) **EP 2 832 582 A1**
(43) Date of publication of application: **04.02.2015**
(21) Application number: 13769883.3
(22) Date of filing: 26.03.2013
(51) Int. Cl.: B60N 2/08

(54) **SLIDE RULE MECHANISM**

(30) Priority: 27.03.2012 JP 2012072469; 27.03.2012 JP 2012072470; 27.03.2012 JP 2012072471
(71) Applicant: TS Tech Co., Ltd., Asaka-shi, Saitama 351-0012 (JP)
(72) Inventor: FURUTA, Masaya, Shioya-gun Tochigi 329-1217 (JP)
(74) Representative: Grünecker, Kinkeldey, Stockmair & Schwanhäusser
(86) International application number: PCT/JP2013/058761
(87) International publication number: WO 2013/146774

(57) **Abstract**

Provided is a slide rail mechanism including a movable rail that is difficult to deform even if an external force acts on the movable rail and that is stably kept in a state in which a portion of the movable rail is inserted into an inner space of a lower rail. Of an upper rail 20, an inner portion 22 inserted into an inner space IS of a hollow-shaped lower rail 40 includes a region having a closed cross-section in a slidable movement direction of the upper rail 20, a normal direction of the closed cross-section being the slidable movement direction.

## Description

### Technical Field

The present invention relates to a slide rail mechanism of a vehicle seat and particularly relates to a slide rail mechanism configured so that at least a part of a movable rail is inserted into an inner space of a hollow-shaped fixed rail.

### Background Art

A slide rail mechanism for fixing a vehicle seat in a state in which the slide rail is slidable relatively to a vehicle body floor is already well known. The slide rail includes a fixed rail fixed to the vehicle body floor and a movable rail slidably movable along the fixed rail as main constituent elements. Some slide rail mechanisms each including a hollow-shaped fixed rail and operating in a state in which the entirety of or a part of the movable rail is inserted into the inner space of the fixed rail (see, for example, Patent Document 1).

In a seat slide device described in Patent Document 1, an upper rail serving as the movable rail includes an upper surface, sidewall surfaces extending downward from both ends of the upper wall surface, bent surfaces bent outward from lower end portions of the respective sidewall surfaces, and inclined surfaces bent inward further from end portions of the respective bent surfaces. Furthermore, in the seat slide device described in Patent Document 1, a portion of the upper rail that ranges from the lower end portions of the sidewall surfaces to the inclined surface is inserted into the inner space of a lower rail serving as the fixed rail.

Moreover, the slide rail mechanism configured as described above is typically configured so that the portion of the movable rail inserted into the inner space of the fixed rail is suppressed from falling off to the outside of the inner space from an open end of the fixed rail (see, for example, Patent Document 2). In the slide rail described in Patent Document 2, a stopper bolt is inserted into the inner space of a lower rail serving as the fixed rail, and a portion of the stopper bolt that is located in the inner space of the lower rail stops an upper rail serving as the movable rail. By providing the stopper bolt serving as a retaining portion in the slide rail described in Patent Document 1, it is possible to suppress the upper rail from falling off to the outside of the inner space of the lower rail.

Furthermore, the slide rail mechanism configured as described above is typically such that a state of the movable rail is kept to a locked state in which the movable rail is immovable relatively to the fixed rail when a position of the movable rail is fixed. As a configuration for keeping the state of the movable rail to the locked state, there is known a configuration, for example, in which a protrusion-shaped lock portion attached to the movable rail is engaged with a hole-shaped engagement portion provided in the inner space of the fixed rail (see, for example, Patent Document 3). In a seat slide device described in Patent Document 3, a plurality of lock holes are formed in a bottom wall of the fixed rail along a slide direction of the movable rail, and lock clicks engageable/disengageable with the lock holes are provided on the movable rail. Furthermore, the lock clicks are formed in an end portion of a lock plate supported rotatably about the movable rail (an opposite end portion to that pivotally supported by a rotational shaft). Moreover, an urging force from an urging member such as a spring acts on the lock plate, and the urging force presses the end portion in which the lock clicks are formed downward.

In the seat slide device described in Patent Document 3 configured as described above, the lock clicks are engaged with the lock holes as long as the end portion of the lock plate in which the lock clicks are formed is pressed downward, so that the state of the movable rail can be kept to the locked state.

Patent Document 1: JP 2010-887 A
Patent Document 2: JP 3318232
Patent Document 3: JP 2005-67557 A

### DISCLOSURE OF THE INVENTION

### Problem to be solved by the Invention

Meanwhile, in the seat slide device described in Patent Document 1, an opening is formed in an upper portion of the lower rail, and a part of the upper rail is exposed to the outside of the lower rail via the opening. More specifically, a portion of the upper rail that ranges from the upper wall surface to the sidewall surfaces projects to the outside of the inner space of the lower rail via the opening. A seat main body of the vehicle seat is fixed to the upper wall surface projecting to the outside of the inner space of the lower rail.

In a case of the above-described configuration, an upward load acts on the upper wall surface of the upper rail when an occupant is seated on the vehicle seat with the occupant's back leaned against a seatback. This load deforms the upper rail, and the portion of the upper rail inserted into the inner space of the lower rail falls off from the opening formed in the upper portion of the lower rail, with the result that the upper rail possibly and eventually detaches from the lower rail.

Therefore, the movable rail is desired to have a structure capable of making it difficult to deform the movable rail even if an external force acts on the movable rail and capable of keeping a state in which a part of the movable rail is inserted into the inner space of the lower rail, that is, a state in which the movable rail is slidably movable relatively to the lower rail. It is also required to suppress the fixed rail from being deformed so as not to enlarge the opening to have a width at which the movable rail may be detached from the opening.

On the other hand, when the upper rail is assembled with the lower rail in a state in which the upper rail is slidable relatively to the lower rail, a part of the upper rail is engaged with a predetermined portion of the lower rail. In this case, it is required to provide a configuration capable of stably sliding the upper rail along the lower rail while keeping an engagement state in which the upper rail is engaged with the lower rail.

Furthermore, while the portion of the movable rail inserted into the inner space of the lower rail is formed into a shape difficult to deform, it is favorable that the shape is one that effectively uses the inner space. It is more favorable that the movable rail has a shape capable of keeping an attitude of the portion inserted into the inner space of the lower rail.

Moreover, with views of making the state of the movable rail into the state in which the movable rail is immovable relatively to the fixed rail, that is, into the locked state, in a configuration in which a gear provided on the movable rail is engaged with that of the fixed rail, a plurality of gears are sometimes disposed at positions at which engagement combinations differ. In such a case, the respective gears are desirably disposed at positions appropriate for stably keeping the engagement state.

Furthermore, the portion formed on the movable rail so as to suppress the deformation of the lower rail abuts on (interferes with) a corresponding portion of the lower rail at a time of suppressing the deformation of the lower rail. This possibly entails the generation of abnormal noise.

In the meantime, in the slide rail described in Patent Document 2, through-holes are provided in a pair of sidewalls provided on the lower rail, respectively so as to attach the stopper bolt described above. The stopper bolt is inserted from the through-hole in one of the sidewalls and a nut is fixed to a tip end portion of the bolt protruding from the through-hole in the other sidewall. That is, in the slide rail described in Patent Document 2, a head of the stopper bolt and the fixed nut protrude outward of the lower rail while the stopper bolt is being attached, by as much as which the device is disadvantageously made larger in size.

If the slide rail is made larger in size, problems such as difficulty in securing an installation space therefor occur. It is, therefore, desired to provide a more compact slide rail mechanism. Specifically, when configuring the retaining member for preventing the movable rail from being detached from the inner space of the fixed rail, stopper portions are provided on both the movable rail and the fixed rail, respectively. The stopper portion of the fixed rail is desirably installed at an appropriate position for effectively using the inner space of the fixed rail.

Needless to say, the stopper portion of the movable rail and that of the fixed rail are desirably higher in rigidity. For this reason, an arrangement position of the stopper portion on the movable rail and that of the stopper portion on the fixed rail are set to appropriate positions for improving the rigidity.

Furthermore, when the portion of the movable rail inserted into the inner space of the fixed rail is suppressed from being detached to the outside of the inner space, the stopper portions provided on both the movable rail and the fixed rail often collide against each other to possibly generate abnormal noise.

Meanwhile, it is desirable that the state of the movable rail is stably kept to the locked state in all periods but a period for sliding the movable rail. However, in the seat slide device described in Patent Document 3, the lock clicks are possibly disengaged from the lock holes if, for example, the lock plate rotates inadvertently and the end portion on which the lock clicks are formed floats. Demand therefore rises for a slide rail mechanism capable of more stably keeping the state of the movable rail to the locked state. It is noted that a simpler configuration is desired as the configuration of the slide rail mechanism capable of stably keeping the state of the movable rail to the locked state.

Furthermore, if the lock members attached to the movable rail are movable relatively to the engagement portion provided in the inner space of the fixed rail in an engagement/disengagement direction, it is required to configure the lock members to stably move in the engagement/disengagement direction. As for the configuration of stably moving the lock member, it is desirable to make the number of components as small as possible. It is also desirable to ensure the rigidity around the lock members for stably moving the lock members.

Furthermore, the movable rail is possibly inclined per se with respect to the fixed rail. Even in this case, it is more preferable that the state of the movable rail is kept to the locked state. It is further desirable that moving time (operating time) of the lock members is as short as possible for promptly switching the state of the movable rail.

Moreover, if the state of the movable rail is to be set to the locked state, abnormal noise is possibly generated when the lock members attached to the movable rail abut on the engagement portions provided in the inner space of the fixed rail.

The present invention has been, therefore, made in light of the above-described problems, and an object of the present invention is to provide a slide rail mechanism including a movable rail that is difficult to deform even if an external force acts on the movable rail and that is stably kept in a state in which a portion of the movable rail is inserted into an inner space of a lower rail.

Another object of the present invention is to provide a slide rail mechanism capable of suppressing deformation of a fixed rail in a direction of enlarging an opening formed in an upper wall of the fixed rail.

Another object of the present invention is to provide a slide rail mechanism capable of stably slidably moving along a lower rail while an upper rail is kept engaged with the lower rail upon engagement of a part of the upper rail with a predetermined portion of the lower rail so as to slidably assemble the upper rail with the lower rail.

Another object of the present invention is to provide a slide rail mechanism in which a shape of a portion of a movable rail that is inserted into an inner space of a lower rail is set to an appropriate shape according to a space of the inner space. Still another object of the present invention is to provide a slide rail mechanism in which a shape of a portion of a movable rail that is inserted into an inner space of a lower rail is set to a shape that enables an attitude of the inserted portion in the inner space to be kept.

Another object of the present invention is to provide a slide rail mechanism in which a gear of a movable rail and that of a fixed rail are disposed at position appropriate for stably keeping an engagement state in a configuration of engaging the gear of the movable rail with that of the fixed rail for making a state of the movable rail into a state in which the movable rail is immovable relatively to the fixed rail.

Another object of the present invention is to provide a slide rail mechanism capable of suppressing generation of abnormal noise at a time of abutting a portion formed on a movable rail so as to suppress deformation of a lower rail on a corresponding portion of the fixed rail.

Yet another object of the present invention is to provide a slide rail mechanism capable of more stably keeping a state of a movable rail to a locked state, and particularly to provide a slide rail mechanism capable of stably keeping a state of a movable rail to a locked state with a simpler configuration.

Another object of the present invention is to provide a slide rail mechanism capable of causing a lock member attached to a movable rail to stably move in an engagement/disengagement direction if the lock member is movable relatively to an engagement portion provided in an inner space of a fixed rail in the engagement/disengagement direction, and particularly to achieve a configuration in which the number of components is as small as possible and in which the rigidity of surroundings of the lock member is secured.

Another object of the present invention is to provide a slide rail mechanism capable of keeping a state of a movable rail to a locked state even if the movable rail is inclined per se with respect to a fixed rail.

Another object of the present invention is to provide a slide rail mechanism configured so that moving time (operating time) of a lock member is as short as possible for promptly switching a state of a movable rail.

Another object of the present invention is to provide a slide rail mechanism configured so as to suppress abnormal noise generated when a lock member attached to a movable rail abuts on an engagement portion provided in an inner space of a fixed rail.

Still another object of the present invention is to provide a more compact slide rail mechanism as a configuration for suppressing a portion of a movable rail inserted into an inner space of a fixed rail from being detached to outside of the inner space. An object of the present invention is particularly to make effective use of the inner space by, for example, providing a stopper portion for preventing the detachment at an appropriate position in the inner space of the fixed rail.

Furthermore, another object of the present invention is to achieve a slide rail mechanism in which each of an arrangement position of a stopper portion on a movable rail and that of a stopper portion on a fixed rail is set to an appropriate position for improving rigidity.

Still another object of the present invention is to achieve a slide rail mechanism capable of suppressing the generation of abnormal noise due to the collision of stopper portions provided on both a movable rail and a fixed rail against each other.

### Means for solving Problem

The above-described problem is solved by a slide rail mechanism of the present invention. The slide rail mechanism of the present invention includes: a hollow-shaped fixed rail fixed to a vehicle main body; and a movable rail slidably moving along the fixed rail in a state in which at least a portion of the movable rail is inserted into an inner space of the fixed rail, in which the portion of the movable rail inserted into the inner space includes a region having a solid or closed cross-section in a slidable movement direction of the movable rail, a normal direction of the solid or closed cross-section being the slidable movement direction.

As described above, if a part of or entirety of the portion of the movable rail inserted into the inner space of the fixed rail has a solid or closed cross-section in the slidable movement direction of the movable rail, the normal direction of the solid or closed cross-section being the slidable movement direction, the rigidity of the portion of inserted into the inner space of the fixed rail improves. As a result, the movable rail according to the present invention is difficult to deform even if an external force acts on the movable rail, and is stably kept in a state in which the portion of the movable rail is inserted into the inner space of the fixed rail.

Furthermore, according to the above-described slide rail mechanism, it is preferable that the fixed rail includes an upper wall having a slit formed to range from one end to other end of the fixed rail along the slidable movement direction, a portion of the movable rail is arranged at a position upward of the slit and outside of the inner space, the portion of the movable rail arranged at the position upward of the slit and outside of the inner space includes an opposed region opposed to an upper surface of the upper wall in an upper to lower direction; and a first extension region extending downward at a position adjacent to an end portion of the opposed region in a cross direction crossing the slidable movement direction, and that the first extension region is opposed to an end surface of the upper wall in the cross direction, and restricts the upper wall from being deformed so that the slit is wider in the cross direction.

As described above, if the first extension region opposed to the end surface of the upper wall in the cross direction is provided in the portion of the movable rail arranged at the position upward of the slit formed in the upper wall of the fixed rail and outside of the inner space of the fixed rail, the first extension region stops the end surface of the upper wall. Therefore, it is possible to suppress the deformation of the upper wall of the fixed rail in the direction of enlarging the slit.

Moreover, in the slide rail mechanism described above, it is preferable that the first extension region extends up to a lower end position of the upper wall, and that the portion of the movable rail arranged at the position upward of the slit and outside of the inner space further includes a second extension region extending toward the fixed rail in the cross direction at a position adjacent to a lower end portion of the first extension region.

As described above, if the second extension region crossing the first extension region is provided to be adjacent to the lower end portion of the first extension region, the rigidity of the first extension region improves and the effect of restricting the deformation of the upper wall by the first extension region is exhibited more effectively.

Furthermore, in the slide rail mechanism described above, it is preferable that a concave portion located in an end portion of a lower surface of the upper wall in the cross direction and formed by being recessed upward is formed in the lower surface of the upper wall, the portion of the movable rail arranged at the position upward of the slit and outside of the inner space further includes a third extension region extending upward toward the concave portion at a position adjacent to an end portion of the second extension region opposite to a side on which the first extension region is located in the cross direction, and that an upper end portion of the third extension region is fitted into the concave portion.

As described above, if the third extension region crossing the second extension region is provided to be adjacent to the endportion of the second extension region, the rigidity of surroundings of the first extension region further improves. Furthermore, since the upper end portion of the third extension region is fitted into the concave portion formed in the lower surface of the upper wall of the fixed rail, it is possible to exhibit the effect of restricting the deformation of the upper wall more effectively. Since the upper end portion of the third extension region slidably moves while being guided by the concave portion, it is possible to slidably move the movable rail more stably.

Moreover, in the slide rail mechanism described above, it is preferable that the fixed rail includes a bulging portion bulging outward from an end surface of the fixed rail in the cross direction, and that the bulging portion is opposed to the second extension region in the upper to lower direction, and restricts the end portion of the second extension region on a side on which the third extension region is located in the cross direction from moving downward.

As described above, if the bulging portion stops the end portion of the second extension region on the side on which the third extension region is located from moving downward, the engagement of the fixed rail-side engagement portion and the movable rail-side engagement portion is not cancelled. It is thereby possible to keep the good engagement state between the fixed rail-side engagement portion and the movable rail-side engagement portion, and to slidably move the movable rail more stably along the fixed rail.

Furthermore, in the slide rail mechanism described above, it is preferable that the first extension region, the second extension region, and the third extension region of the movable rail are made of a resin material, and that a portion of the upper wall opposed to any one of the first extension region, the second extension region, and the third extension region is made of a resin material.

With the above-described configuration, it is possible to suppress the generation of abnormal noise when the portions formed on the movable rail so as to suppress the deformation of the lower rail, i.e., the first extension region, the second extension region, and the third extension region abut on the corresponding portions of the fixed rail.

Moreover, in the slide rail mechanism described above, it is preferable that the portion of the movable rail inserted into the inner space includes a protruding portion that is located at a position downward of the slit, and that protrudes outward of an edge of the slit in the cross direction.

As described above, if the portion of the movable rail inserted into the inner space includes the protruding portion that protrudes outward of the edge of the slit, it is possible to design the shape of the portion of the movable rail inserted into the inner space of the fixed rail to a shape favorable for improving the rigidity while making effective use of a space in the inner space.

Furthermore, in the slide rail mechanism described above, it is preferable that the protruding portion is located right under the lower surface of the upper wall, and an upper end surface of the protruding portion is along a range of the lower surface adjacent to the slit.

As described above, if the upper end surface of the protruding portion is along the range of the lower surface of the upper wall of the fixed rail adjacent to the slit, it is possible to suppress the inclination of the portion of the movable rail inserted into the inner space of the fixed rail. This is because the protruding portion is stopped by the upper wall even if an external force acts on the portion inserted into the inner space of the fixed rail.

Moreover, in the slide rail mechanism described above, it is preferable that the slide rail mechanism includes: a fixed rail-side gear provided in the inner space, and formed so as to make a state of the movable rail into a state in which the movable rail is immovable relatively to the fixed rail; and a locking gear attached to the movable rail, and engaged with the fixed rail-side gear by moving in the upper to lower direction, and that a combination of the fixed rail-side gear and the locking gear is arranged at a position on each side of the portion of the movable rail that is inserted into the inner space in the cross direction.

As described above, if a combination of the fixed rail-side gear and the locking gear is arranged at a position on each side of the portion of the movable rail that is inserted into the inner space of the fixed rail, the fixed rail-side gears and the locking gears on one end side and those on the other end side in the cross direction are engaged with one another with a gap therebetween in the cross direction. It is thereby possible to stably keep the engagement states of the gears on one end side and the other end side of the inner space.

Furthermore, in the slide rail mechanism described above, it is preferable that the slide rail mechanism includes: a locking mechanism attached to the movable rail, and keeping a state of the movable rail to a state in which the movable rail is immovable relatively to the fixed rail; and a fixed rail-side engagement portion provided in the inner space, and engaged with the locking mechanism when the locking mechanism makes the state of the movable rail to the state in which the movable rail is immovable relatively to the fixed rail, the fixed rail-side engagement portion is provided on each of one end side and other end side of the inner space in a cross direction crossing the slidable movement direction, the locking mechanism includes a first lock member engaged with the fixed rail-side engagement portion provided on the one end side of the inner space in the cross direction; and a second lock member engaged with the fixed rail-side engagement portion provided on the other end side of the inner space in the cross direction, and that the first lock member and the second lock member move in opposite directions in the cross direction so that each of the first lock member and the second lock member is engaged with the corresponding fixed rail-side engagement portion.

With the above-described configuration, when the state of the movable rail is made into the state in which the movable rail is immovable relatively to the fixed rail, that is, into the locked state, the first lock member and the second lock member move in opposite directions in the cross direction so that each of the first lock member and the second lock member is engaged with the corresponding fixed rail-side engagement portion. As a result, it is possible to keep the state of the movable rail to the locked state more stably as compared with a configuration in which only one of the first lock member and the second lock member is provided.

Moreover, in the slide rail mechanism described above, it is preferable that the fixed rail-side engagement portion is a plurality of fixed rail-side gears formed along the slidable movement direction, a first locking gear engaged with the fixed rail-side gear is provided in an upper end portion of the first lock member, a second locking gear engaged with the fixed rail-side gear is provided in a lower end portion of the second lock member, the first lock member moves upward in an upper to lower direction so that the first locking gear is engaged with the fixed rail-side gear provided upward of the inner space and the second lock member moves downward in the upper to lower direction so that the second locking gear is engaged with the fixed rail-side gear provided downward of the inner space when the locking mechanism makes a state of the movable rail into a state in which the movable rail is immovable relatively to the fixed rail.

The above-described configuration is a specific configuration for keeping the state of the movable rail to the locked state more stably, with the configuration, the first lock member and the second lock member move oppositely in the upper to lower direction so that each of the first lock member and the second lock member is engaged with the corresponding fixed rail-side gear.

Furthermore, in the slide rail mechanism described above, it is preferable that the locking mechanism further includes a rotational arm rotating about a rotational shaft crossing both the slidable movement direction and the upper to lower direction, a central portion of the rotational arm is supported by the rotational shaft, one end portion of the rotational arm is engaged with the first lock member, other end portion of the rotational arm is engaged with the second lock member, and by allowing the rotational arm to rotate about the rotational shaft, the first lock member moves upward in the upper to lower direction and the second lock member moves downward in the upper to lower direction.

As described above, if by allowing the rotational arm to rotate about the rotational shaft, the first lock member moves upward in the upper to lower direction and the second lock member moves downward in the upper to lower direction, both the first lock member and the second lock member can be easily moved oppositely in the upper to lower direction. That is, with the above-described configuration, it is possible to more stably keep the state of the movable rail with a simpler structure.

Moreover, in the slide rail mechanism described above, it is preferable that the slide rail mechanism includes: a first guide portion guiding the first lock member so as to restrict a movement direction of the first lock member to the upper to lower direction during rotation of the rotational arm; and a second guide portion guiding the second lock member so as to restrict a movement direction of the second lock member to the upper to lower direction during the rotation of the rotational arm.

As described above, it is possible to ensure that each lock member moves in the upper to lower direction by the corresponding guide portion since the guide portion restricting the movement direction of the lock member is provided for every lock member.

Furthermore, in the slide rail mechanism described above, it is preferable that the first guide portion and the second guide portion are provided on respective outer side surfaces of the movable rail, and integrated with the movable rail.

As described above, it is possible to contribute to decreasing the number of components and to further improve the rigidities of the movable rail and the guide portion if the guide portion is integrated with the movable rail.

Moreover, in the slide rail mechanism described above, it is preferable that the first guide portion includes a first guide groove storing therein the first lock member in a state in which the first lock member is movable in the upper to lower direction; and a first lock-member stopper portion arranged on a lower end of the first guide groove, and stopping the first lock member when the first lock member reaches a lower end position in a movement range, and that the second guide portion includes a second guide groove storing therein the second lock member in a state in which the second lock member is movable in the upper to lower direction; and a second lock-member stopper portion arranged on an upper end of the second guide groove, and stopping the second lock member when the second lock member reaches an upper end position in the movement range.

As described above, if the lock-member stopper portion stopping the lock member is provided in each guide portion, it is possible to restrict the lock member from further moving in the same direction after the lock member moves to the position at which the lock member abuts on the lock-member stopper portion. It is possible to reduce the operation time by restricting the movement of the lock member to the limit positions as compared with a case where the movement is not restricted.

Furthermore, in the slide rail mechanism described above, it is preferable that the first guide portion includes a pair of first guide groove forming portions aligned at an interval; the first guide groove formed by a gap between the pair of first guide groove forming portions; and the first lock-member stopper portion coupling the pair of first guide groove forming portions with each other on the lower end of the first guide groove, and the second guide portion includes a pair of second guide groove forming portions aligned at an interval; the second guide groove formed by a gap between the pair of second guide groove forming portions; and the second lock-member stopper portion coupling the pair of second guide groove forming portions on the upper end of the second guide groove.

As described above, if the lock-member stopper portion constituting the guide portion couples the pair of guide groove forming portions similarly constituting the guide portion, the rigidity of each of the paired guide groove forming portions improves.

Moreover, in the slide rail mechanism described above, it is preferable that wherein the first lock member, the second lock member, the first guide portion, the second guide portion, and the movable rail are made of a resin material.

With the above-described configuration, it is possible to suppress the generation of abnormal noise when the lock member moves in the upper to lower direction while being guided by the guide portion or when the lock member contacts a region of the movable rail other than the guide portion during the movement of the lock member in the upper to lower direction.

Furthermore, in the slide rail mechanism described above, it is preferable that the first lock-member stopper portion and the second lock-member stopper portion are both made of a resin material.

With the above-described configuration, it is possible to suppress collision noise generated when the lock member moves in the upper to lower direction toward the lock-member stopper portion while being guided by the guide portion and the lock member abuts on the lock-member stopper portion and stopped thereby.

Moreover, in the slide rail mechanism described above, it is preferable that the movable rail includes a pair of outer side surfaces, the first lock member and the second lock member are provided at each of the outer side surfaces and attached to the outer side surfaces, the fixed rail-side gears provided upward of the inner space are arranged both at positions upward of the first lock member attached to one of the outer side surfaces and at positions upward of the first lock member attached to the other outer side surface, and that the fixed rail-side gears provided downward of the inner space are arranged both at positions downward of the second lock member attached to one of the outer side surfaces and at positions downward of the second lock member attached to the other outer side surface.

As described above, with the configuration in which the first lock member and the second lock member are provided on each of the pair of the outer side surfaces of the movable rail, and in which the fixed rail-side gears are provided at the positions upward of each first lock member and the fixed rail-side gears are provided at the positions downward of each second lock member, it is possible to stably keep the state of the movable rail to the locked state even if the movable rail is inclined. This is because the first lock member and the second lock member 64 provided at least one of the outer side surfaces are engaged with the lower rail-side gears.

Furthermore, in the slide rail mechanism described above, it is preferable that one end of the fixed rail is an open end, the slide rail mechanism further includes : an unlocking mechanism for switching a state of the movable rail from a state in which the movable rail is immovable relatively to the fixed rail to a state in which the movable rail is movable relatively to the fixed rail; a driving member assembled into the movable rail, and driving the unlocking mechanism; and a fastening member fastening the driving member to the movable rail, a restriction portion for restricting the portion of the movable rail inserted into the inner space from being detached from the one end side to outside of the inner space is formed in the inner space of the fixed rail, and that the restriction portion is integrated with the fixed rail, and stops the fastening member in the inner space when the movable rail reaches a position of one end in a slidable movement range.

As described above, the restriction portion serving as a retaining member and provided on the fixed rail is integrated with the fixed rail, and stops the fastening member attached to the movable rail in the inner space of the fixed rail. Therefore, the above-described restriction portion does not project outward of the fixed rail, so that a more compact slide rail mechanism is achieved by the slide rail mechanism including the restriction portion according to the present invention.

Moreover, in the slide rail mechanism described above, it is preferable that the fixed rail includes a pair of sidewalls located on both sides of the inner space, respectively, the restriction portion is located between at least one sidewall out of the pair of the sidewalls and the portion of the movable rail inserted into the inner space, and that the fastening member is attached to a surface of the movable rail on a side opposed to the restriction portion.

As the above-described configuration, if the restriction portion and the fastening portion are located in the space (gap) between the sidewall of the fixed rail and the movable rail, it is possible to improve the rigidity of the sidewall while making effective use of the inner space of the fixed rail.

Furthermore, in the slide rail mechanism described above, it is preferable that the fixed rail includes an adjacent wall adjacent to the at least one sidewall in a state of crossing the at least one sidewall, and that the restriction portion is formed integrally with the fixed rail, and located in a corner formed by the at least one sidewall and the adjacent wall.

With the above-described configuration, the rigidity of the restriction portion per se improves since the restriction portion is attached to both the sidewall and the adjacent wall.

Moreover, in the slide rail mechanism described above, it is preferable that a plurality of fixed rail-side gears aligned along the slidable movement direction is formed in the inner space of the fixed rail, the unlocking mechanism includes a plurality of movable rail-side gears aligned along the slidable movement direction near the movable rail and engaged with the fixed rail-side gears, the state of the movable rail is switched from the state in which the movable rail is immovable relatively to the fixed rail to the state in which the movable rail is movable relatively to the fixed rail when the movable rail-side gears are disengaged from the fixed rail-side gears, and that the restriction portion is formed to extend toward the one end along the slidable movement direction.

If the alignment direction of the fixed rail-side gears is along the formation direction of the restriction portion, the rigidity of each of the fixed rail-side gears and the restriction portion improves.

Furthermore, in the slide rail mechanism described above, it is preferable that both ends of the fixed rail are open ends, other restriction portion restricting the portion of the movable rail inserted into the inner space from being detached from the other end side of the fixed rail to the outside of the inner space, the other restriction portion is a convex portion provided at a position closer to the other end side than the restriction portion in the inner space, and that the movable rail includes a stopped portion stopped by the convex portion in the inner space when the movable rail reaches a position of other end in the slidable movement range.

With the above-described configuration, it is possible to further improve the rigidity of the fixed rail by providing the above convex portion while suppressing the portion of the movable rail inserted into the inner space of the fixed rail from being detached from each of both ends of the fixed rails to the outside of the inner space.

Moreover, in the slide rail mechanism described above, it is preferable that both of the convex portion and the stopped portion are made of a resin material.

With the above-described configuration, it is possible to suppress the generation of abnormal noise when the convex portion is stopped by the stopped portion.

Furthermore, in the slide rail mechanism described above, it is preferable that both of the restriction portion and the fastening portion are made of a resin material.

With the above-described configuration, it is possible to suppress the generation of abnormal noise when the fastening member is stopped by the restriction portion.

### Effect of the Invention

According to the present invention, the movable rail is difficult to deform even if an external force acts on the movable rail, and is stably kept in a state in which a portion of the movable rail is inserted into the inner space of the fixed rail.

Furthermore, according to the present invention, it is possible to suppress the deformation of the upper wall of the fixed rail in the direction of enlarging the slit.

Moreover, according to the present invention, the rigidity of the first extension region improves and the effect of restricting the deformation of the upper wall by the first extension region is exhibited more effectively.

Furthermore, according to the present invention, it is possible to exhibit the effect of restricting the deformation of the upper wall more effectively, and to slidably move the movable rail more stably.

Moreover, according to the present invention, it is possible to keep the good engagement state between the fixed rail-side engagement portion and the movable rail-side engagement portion, and to slidably move the movable rail more stably.

Furthermore, according to the present invention, it is possible to suppress the generation of abnormal noise when the first extension region, the second extension region, and the third extension region abut on the corresponding portions of the fixed rail.

Moreover, according to the present invention, it is possible to design the shape of the portion of the movable rail inserted into the inner space of the fixed rail to a shape favorable for improving the rigidity while making effective use of a space in the inner space.

Furthermore, according to the present invention, it is possible to suppress the inclination of the portion of the movable rail inserted into the inner space of the fixed rail even if an external force acts on the portion.

Moreover, according to the present invention, the fixed rail-side gears and the locking gears on one end side and those on the other end side in the crossing direction are engaged with one another with a gap therebetween in the cross direction. It is possible to stably keep the engagement states on one end side and the other end side of the inner space.

Furthermore, according to the present invention, it is possible to keep the state of the movable rail to the locked state more stably as compared with a configuration in which the movement direction of the lock member moving for being engaged with the engagement portion provided on the fixed rail side is limited to one direction.

Moreover, according to the present invention, a specific configuration is achieved as a configuration for keeping the state of the movable rail to the locked state more stably.

Furthermore, according to the present invention, it is possible to more stably keep the state of the movable rail with a simpler structure.

Moreover, according to the present invention, it is possible to ensure that each lock member moves in the upper to lower direction by the corresponding guide portion.

Furthermore, according to the present invention, it is possible to contribute to decreasing the number of components and to further improve the rigidities of the movable rail and the guide portion.

Moreover, according to the present invention, it is possible to reduce the operation time by restricting the movement of the lock member to the limit positions as compared with a case where the movement is not restricted.

Furthermore, according to the present invention, the rigidity of each of the paired guide groove forming portions improves.

Moreover, according to the present invention, it is possible to suppress the generation of abnormal noise when the lock member moves in the upper to lower direction while being guided by the guide portion or when the lock member contacts a region of the movable rail other than the guide portion during the movement of the lock member in the upper to lower direction.

Furthermore, according to the present invention, it is possible to suppress collision noise generated when the lock member moves in the upper to lower direction toward the lock-member stopper portion while being guided by the guide portion and the lock member abuts on the lock-member stopper portion and stopped thereby.

Moreover, according to the present invention, it is possible to stably keep the state of the movable rail to the locked state even if the movable rail is inclined.

Furthermore, according to the present invention, a more compact slide rail mechanism is achieved as a configuration for suppressing the portion of the movable rail inserted into the inner space of the fixed rail from being detached to the outside of the inner space.

Moreover, according to the present invention, it is possible to improve the rigidity of the sidewall while making effective use of the inner space of the fixed rail.

Furthermore, according to the present invention, the rigidity of the restriction portion per se improves.

Moreover, according to the present invention, the rigidity of each of the fixed rail-side gears and the restriction portion improves.

Furthermore, according to the present invention, it is possible to further improve the rigidity of the fixed rail while suppressing the portion of the movable rail inserted into the inner space of the fixed rail from being detached from each of both ends of the fixed rails to the outside of the inner space.

Moreover, according to the present invention, it is possible to suppress the generation of abnormal noise when the convex portion is stopped by the stopped portion.

Furthermore, according to the present invention, it is possible to suppress the generation of abnormal noise when the fastening member is stopped by the restriction portion.

### BRIEF DESCRIPTION OF THE DRAWINGS

Fig. 1 is a schematic perspective view of a vehicle seat;
Fig. 2 is a schematic perspective view showing frames of the vehicle seat;
FIG. 3 is a schematic perspective view showing a front side of a slide rail mechanism according to an embodiment of the present invention;
FIG. 4 is a schematic view showing the slide rail mechanism viewed from a front end side;
FIG. 5 is a schematic perspective view showing the overall slide rail mechanism according to the embodiment of the present invention;
FIG. 6 is a cross-sectional view taken along A-A of FIG. 5;
FIG. 7 is a schematic side view showing an upper rail and an unlocking mechanism according to the embodiment of the present invention;
FIG. 8 is a schematic view showing a lower rail viewed from the front end side according to the embodiment of the present invention;
FIG. 9 is a schematic sectional view of the lower rail with a width direction of the lower rail being defined as a normal direction according to the embodiment of the present invention;
FIG. 10A shows a front-side limit position in a slidable movement range of the upper rail;
FIG. 10B shows a back-side limit position in the slidable movement range of the upper rail;
FIG. 11 is a schematic view showing the upper rail viewed from a back-end side in a state in which the unlocking mechanism is assembled into the upper rail;
FIG. 12 is an explanatory view of a lock guide portion;
FIG. 13 is a schematic perspective view showing a back-end portion of the upper rail according to the embodiment of the present invention;
FIG. 14 is a schematic side view showing the unlocking mechanism and a link member according to the embodiment of the present invention;
FIG. 15 is a schematic plan view showing the unlocking mechanism and the link member according to the embodiment of the present invention;
FIG. 16A is an explanatory view of a locked state, and FIG. 16B is an explanatory view of an unlocked state;
FIG. 17 is a schematic perspective view of an operation lever in a state in which a spiral spring is attached to the operation lever;
FIG. 18 is an enlarged view of surroundings of a portion of a lever attachment portion to which the operation lever is attached; and
FIG. 19 is a schematic side view showing a front end portion of the slide rail mechanism in a state in which an urging spring is assembled into the slide rail mechanism.

### DETAILED DESCRIPTION OF THE INVENTION

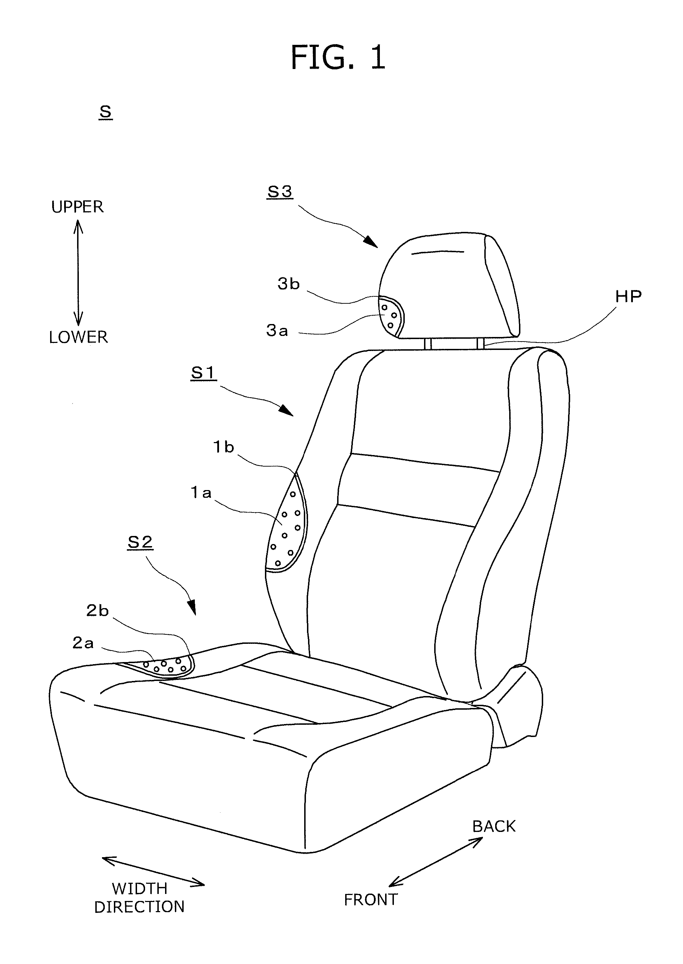

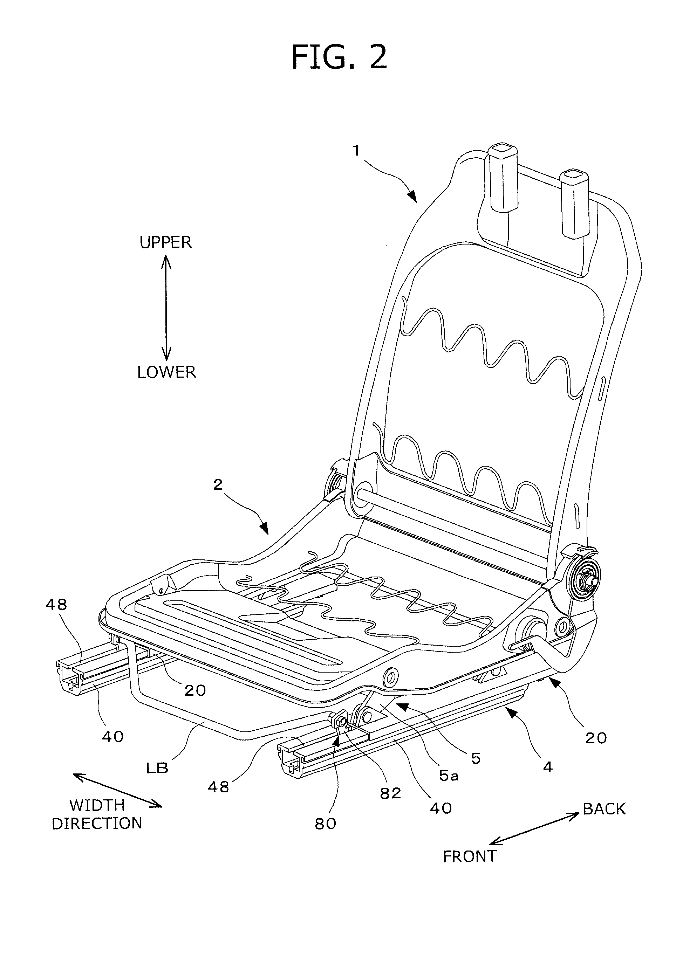

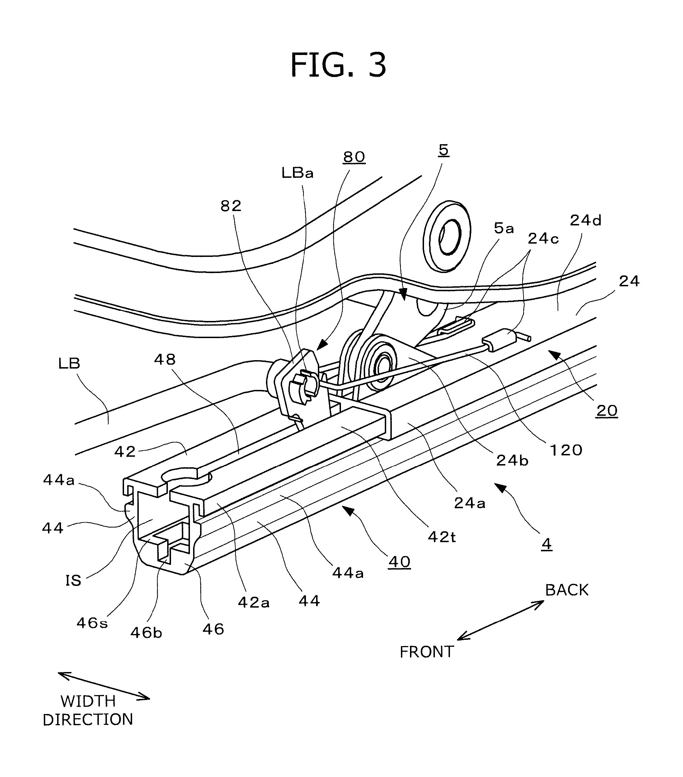

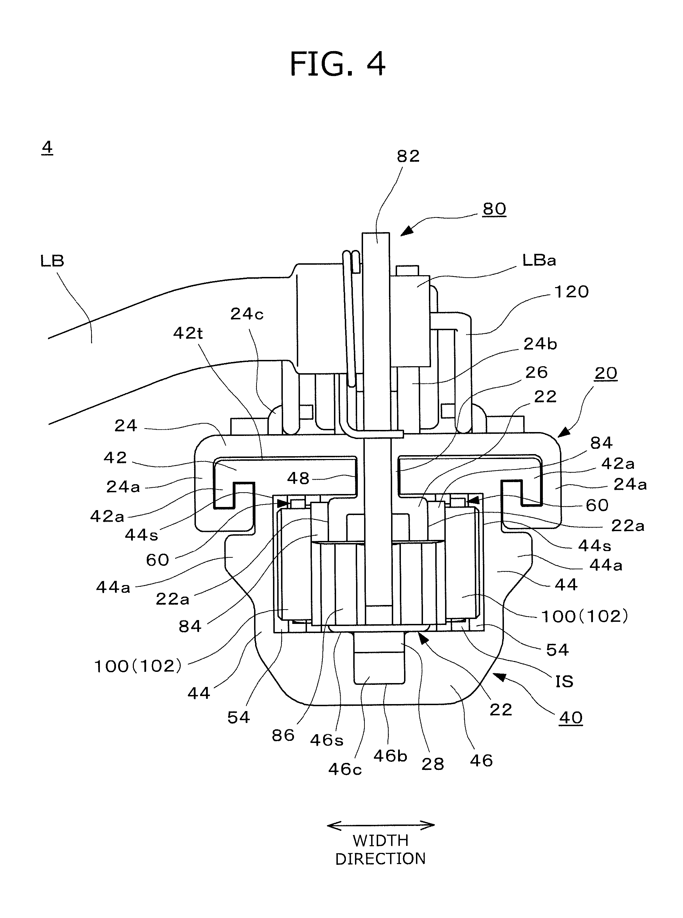

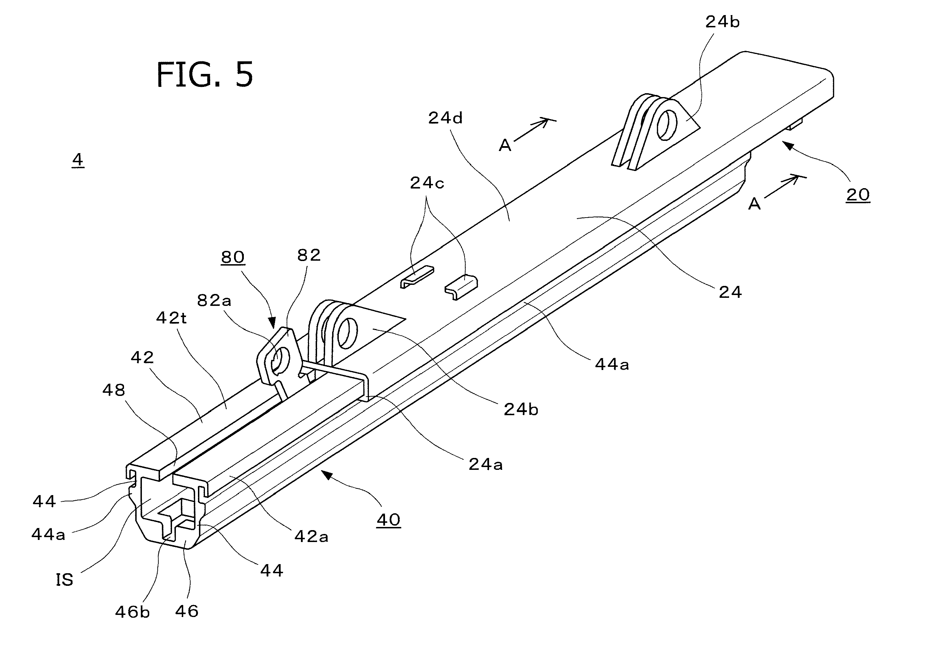

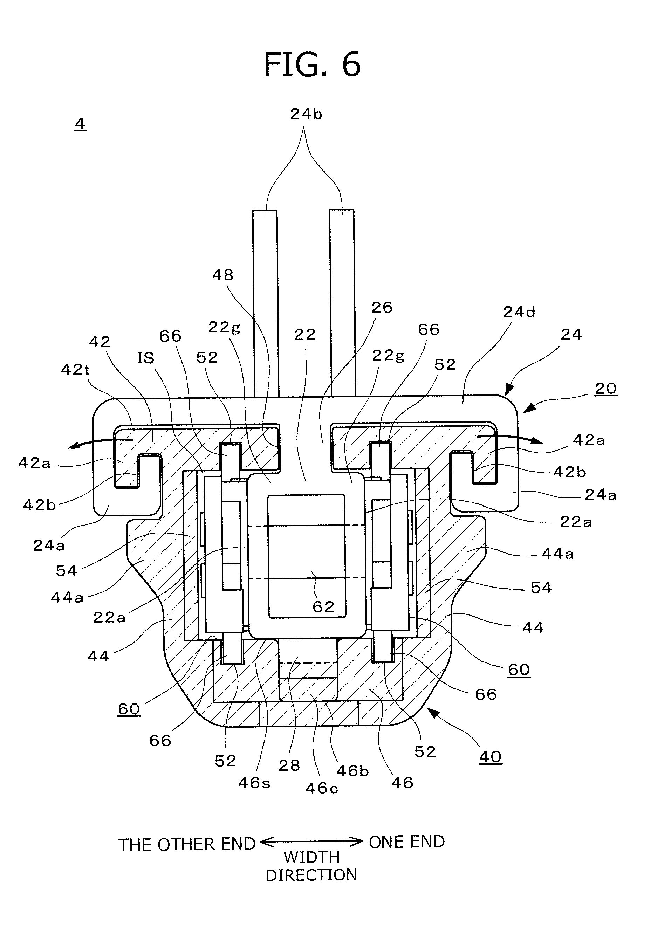

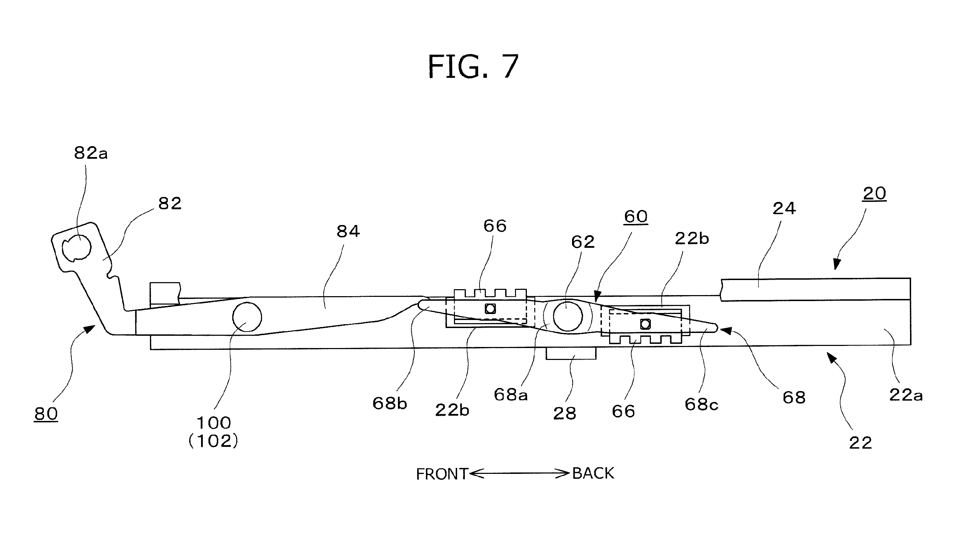

An embodiment of the present invention (hereinafter, "present embodiment") will be described hereinafter with reference to the drawings. Fig. 1 is a schematic perspective view of a vehicle seat. Fig. 2 is a schematic perspective view showing frames of the vehicle seat. FIG. 3 is a schematic perspective view showing a front side of a slide rail mechanism according to the present embodiment. FIG. 4 is a schematic view showing the slide rail mechanism viewed from a front end side. FIG. 5 is a schematic perspective view showing the overall slide rail mechanism according to the present embodiment. FIG. 6 is a cross-sectional view taken along A-A of FIG. 5. FIG. 7 is a schematic side view showing an upper rail and an unlocking mechanism according to the present embodiment. FIG. 7 shows a cutaway view of a part of the upper rail for the sake of showing a configuration of the unlocking mechanism.

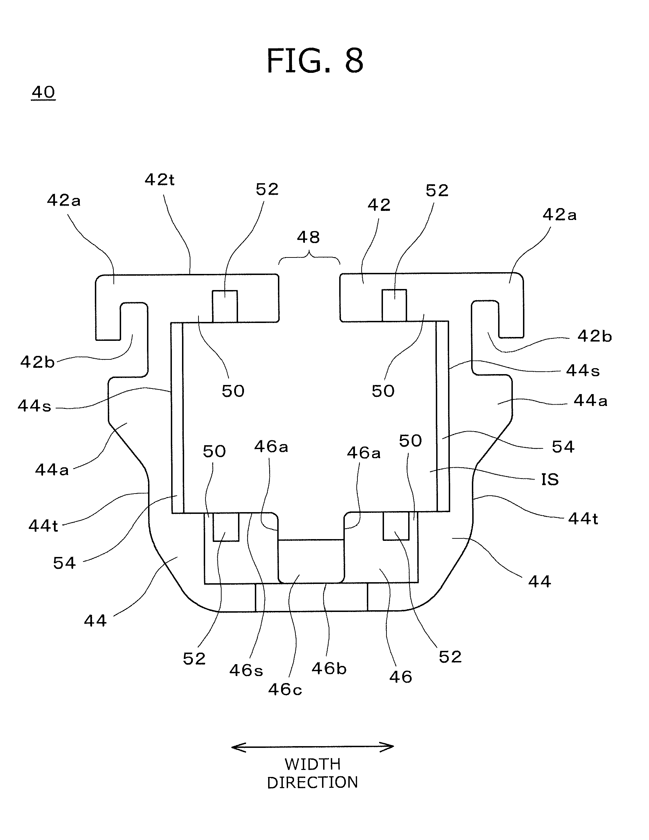

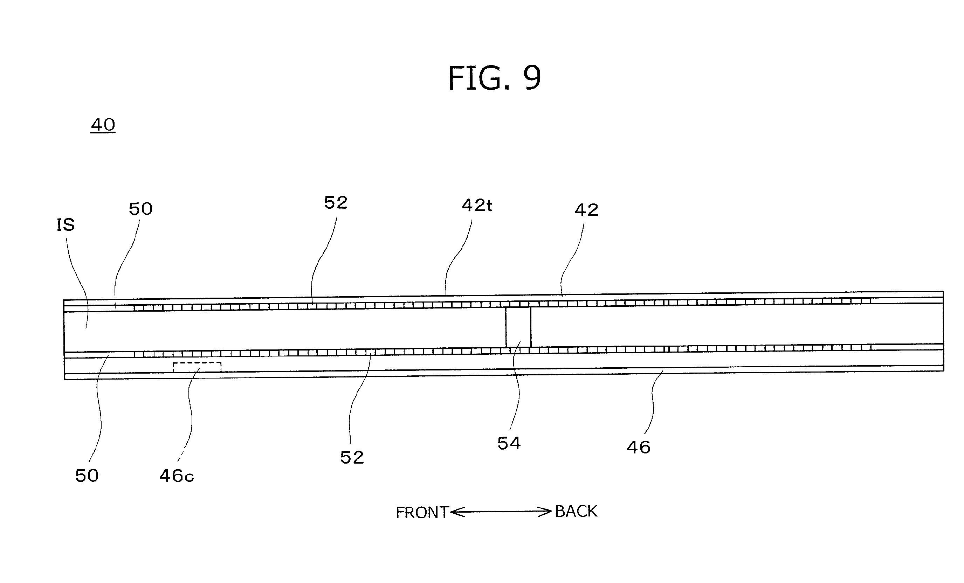

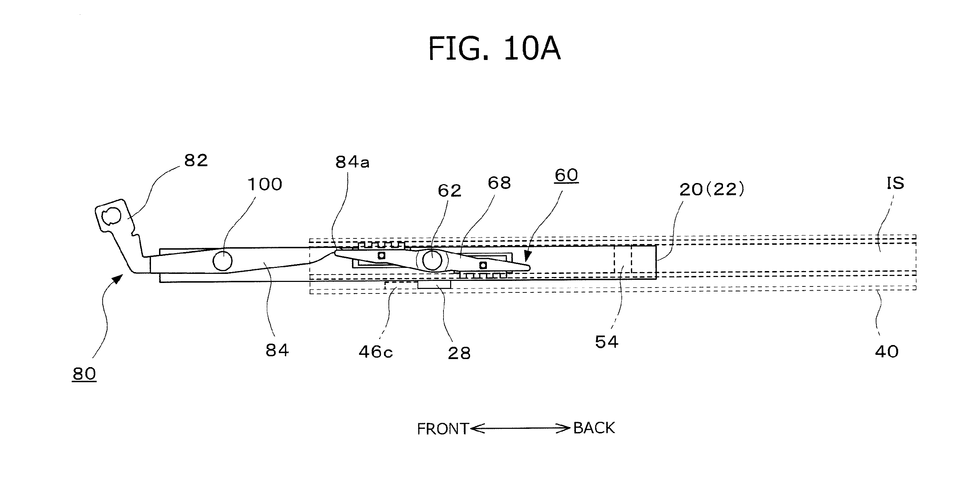

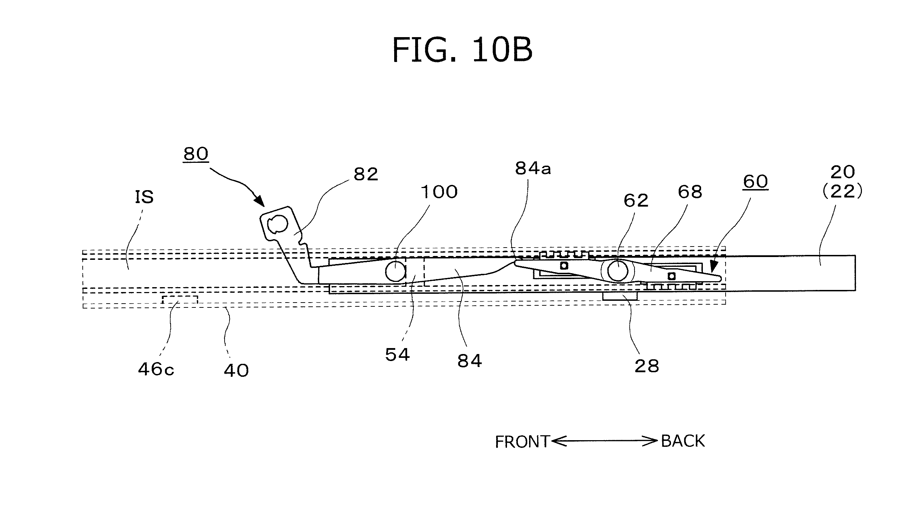

FIG. 8 is a schematic view showing a lower rail viewed from the front end side according to the present embodiment. FIG. 9 is a schematic sectional view of the lower rail with a width direction of the lower rail being defined as a normal direction according to the present embodiment. FIG. 10A shows a front-side limit position in a slidable movement range of the upper rail. FIG. 10B shows a back-side limit position in the slidable movement range of the upper rail. FIGS. 10A and 10B show the slide rail mechanism in a slightly simplified manner so as to facilitate understanding the description. For example, in FIGS. 10A and 10B, an outer portion, to be described later of the upper rail is not shown.

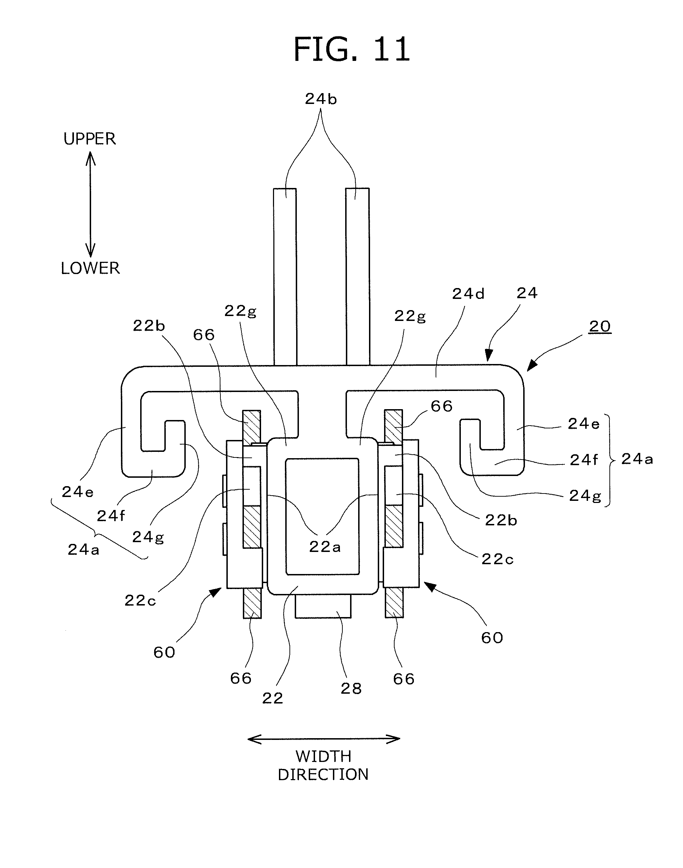

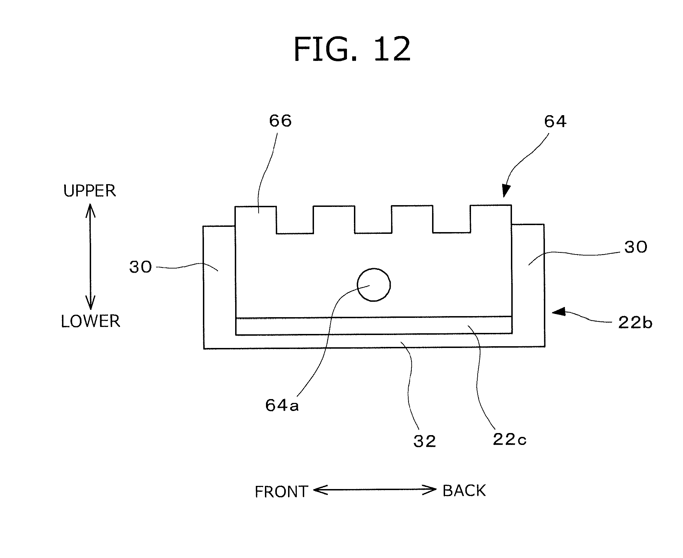

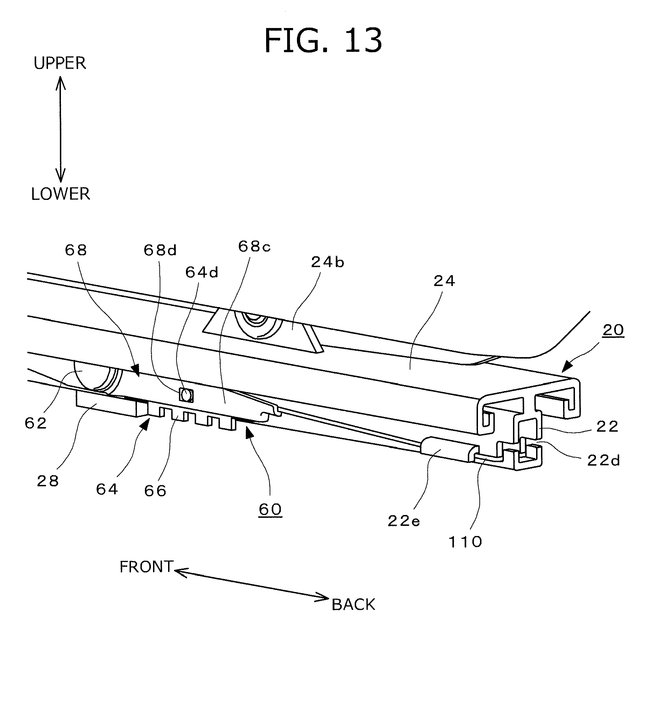

FIG. 11 is a schematic view showing the upper rail viewed from a back-end side in a state in which the unlocking mechanism is assembled into the upper rail. FIG. 12 is an explanatory view of a lock guide portion. FIG. 13 is a schematic perspective view showing a back-end portion of the upper rail according to the present embodiment.

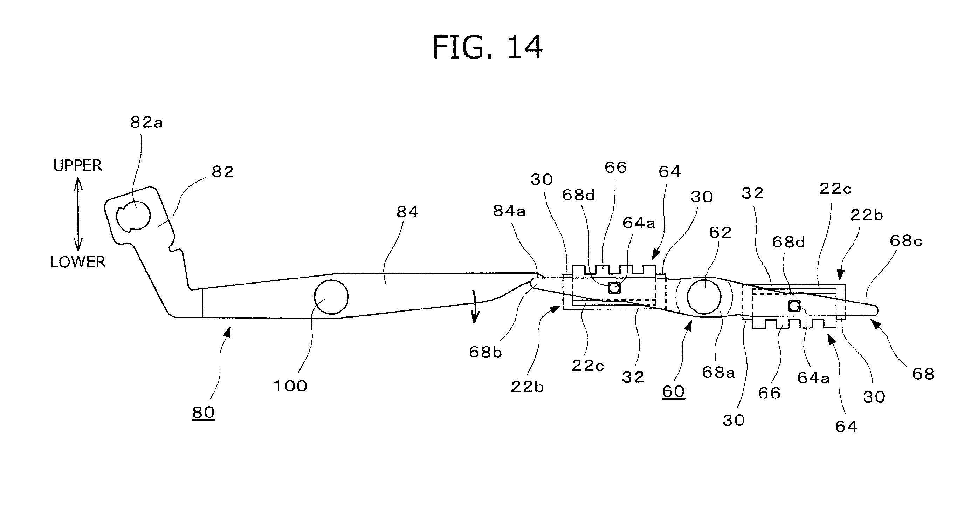

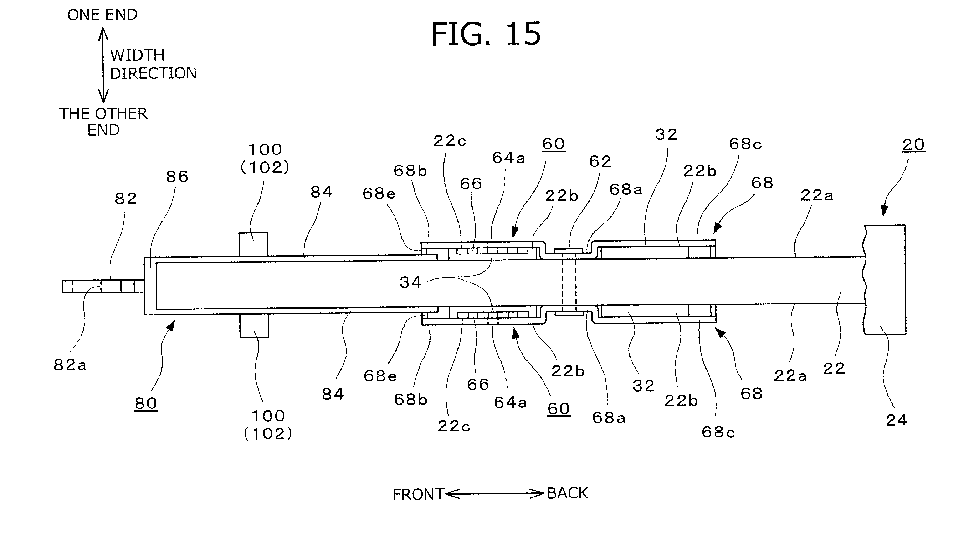

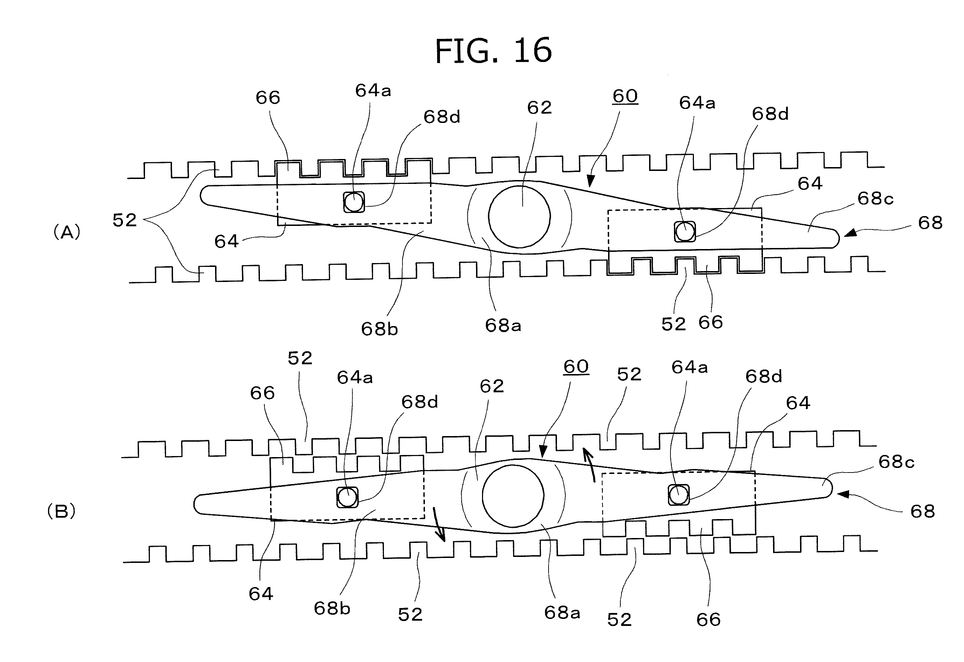

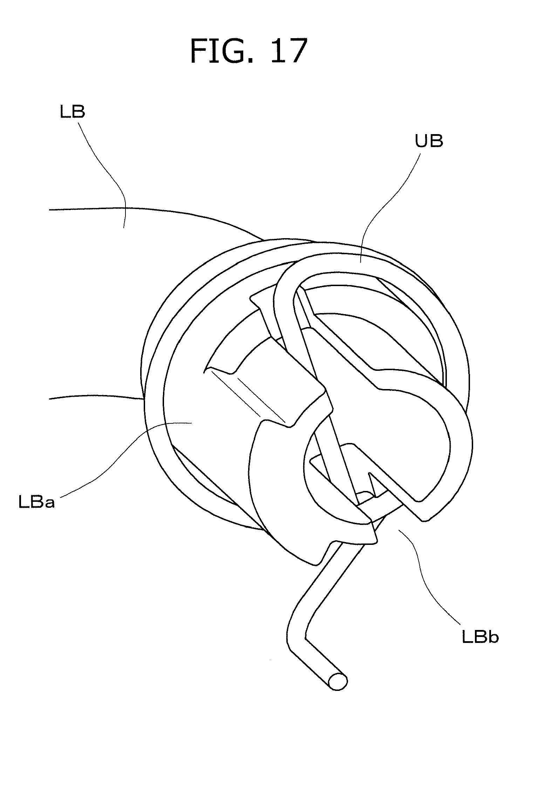

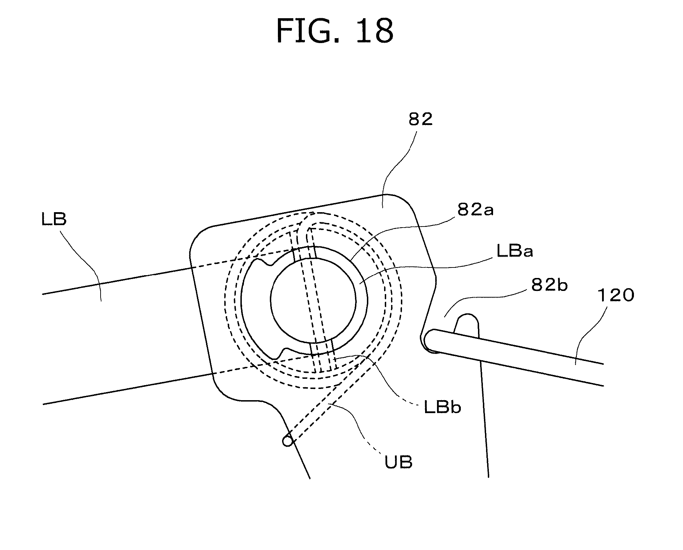

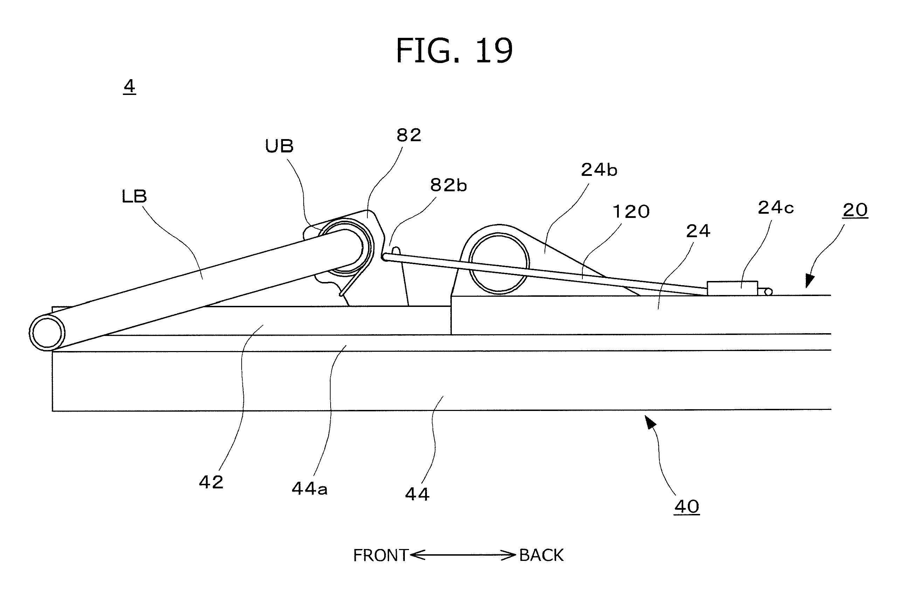

FIG. 14 is a schematic side view showing the unlocking mechanism and a link member according to the present embodiment. FIG. 15 is a schematic plan view showing the unlocking mechanism and the link member according to the present embodiment. FIG. 15 shows a cutaway view of a part of the upper rail for the sake of showing a configuration of the unlocking mechanism. FIG. 16A is an explanatory view of a locked state, and FIG. 16B is an explanatory view of an unlocked state. FIG. 17 is a schematic perspective view of an operation lever in a state in which a spiral spring is attached to the operation lever. FIG. 18 is an enlarged view of surroundings of a portion of a lever attachment portion to which the operation lever is attached. FIG. 19 is a schematic side view showing a front end portion of the slide rail mechanism in a state in which an urging spring is assembled into the slide rail mechanism.

In the following description, a front to back direction refers to a direction matching a vehicle traveling direction, a width direction refers to a direction along a vehicle width, and an upper to lower direction refers to a vehicle vertical direction. Positions of members to be described below refer to positions in a state in which a vehicle seat is attached to a true position of a vehicle.

It is noted that the embodiment to be described below is given only as an example for facilitating understanding the present invention and is not intended to limit the present invention. That is, it goes without saying that shapes, sizes, arrangements, and the like of the members to be described below may be changed or modified without departure of the spirit of the present invention, and that the present invention include equivalents therefor.

A slide rail mechanism 4 according to the present embodiment constitutes a part of a vehicle seat S and is intended to attach the vehicle seat S to a vehicle body (vehicle main body) in a state in which a position of the vehicle seat S can be adjusted in the front to back direction. That is, the slide rail mechanism 4 interposes between a seat main body shown in FIG. 1 and a vehicle body floor in the upper to lower direction, and the vehicle seat S moves relatively to the vehicle body floor in the front to back direction by allowing an upper rail 20 on which the seat main body is mounted to slidably move along a lower rail 40 fixed to the vehicle body floor.

Of the vehicle seat S, the seat main body is a portion configured by a seatback S1, a seat cushion S2, and a headrest S3. The seatback S1 and the seat cushion S2 are configured so as to arrange cushion pads 1a and 2a in frames 1 and 2 and to cover the cushion pads 1a and 2a with skin materials 1b and 2b, respectively. The headrest S3 is configured so as to arrange a cushion pad 3a in a core material (not shown) and to cover the cushion pad 3a with a skin material 3b, and supported by headrest pillars HP attached to a seatback frame 1.

In the present embodiment, height adjustment mechanisms 5 are arranged between the upper rail 20 and a seat cushion frame 2 for adjusting upper and lower positions of the vehicle seat S, as shown in FIG. 2. That is, in the present embodiment, the seat main body is fixed to the upper rail 20 of the slide rail mechanism 4 via the height adjustment mechanisms 5.

An outline of a configuration of the slide rail mechanism 4 will next be described.

As shown in FIGS. 3 to 7, the slide rail mechanism 4 includes the lower rail 40 serving as a fixed rail, the upper rail 20 serving as a movable rail, an unlocking mechanism 60, and a link member 80 serving as a driving member.

The lower rail 40 is a hollow-shaped long body fixed to the vehicle body (vehicle main body), to be specific, fixed to the vehicle body floor, and integrally formed by a resin material according to the present embodiment. Furthermore, as shown in FIG. 2, a pair of lower rails 40 is provided with an appropriate gap kept therebetween in the width direction and the lower rails 40 are configured to be generally bilaterally symmetric with respect to each other.

The upper rail 20 is a long body slidably moving along each lower rail 40 in a state in which a part of the upper rail 20 is inserted into an inner space IS of the lower rail 40, and integrally formed by a resin material according to the present embodiment. As shown in FIG. 4 or 6, the upper rail 20 according to the present embodiment includes a portion inserted into the inner space IS of the lower rail 40 (hereinafter, "inner portion 22"), a portion which is at a position upward of the lower rail 40 and on which the seat main body is mounted (hereinafter, "outer portion 24"), and an upright portion 26 built generally in a perpendicular direction and coupling the inner portion 22 to the outer portion 24.

When the upper rail 20 configured as described above slides along the lower rail 40, the inner potion 22 slides on an inner surface 46s of a bottom wall 46 of the lower rail 40 and the outer portion 24 slides on an upper surface of an outer surface 42t of an upper wall 42 of the lower rail 40. On the other hand, the upright portion 26 moves along a slit 48 formed linearly to range from a front end of the upper wall 42 of the lower rail 40 to a back end thereof.

The unlocking mechanism 60, which is shown in FIG. 6 or 7, operates so as to switch a state of the upper rail 20 from a state in which the upper rail 20 is immovable relatively to the lower rail 40 (hereinafter, "locked state") to a state in which the upper rail 20 is movable relatively to the lower rail 40 ("unlocked state"). The unlocking mechanism 60 is attached to an outer side surface 22a of the inner portion 22 of the upper rail 20 or particularly in a longitudinally central portion of the outer side surface 22a of the inner portion 22 according to the present embodiment. A structure of the unlocking mechanism 60 will be described later in detail.

The link member 80, which is shown in FIG. 7, is a member driving the unlocking mechanism 60 so as to cancel the locked state of the upper rail 20. The link member 80 will be specifically described. The link member 80 interposes between an operation lever LB that an occupant of the vehicle operates and the unlocking mechanism 60 so as to cancel the locked state of the upper rail, and transmits a drive force from the operation lever LB to the unlocking mechanism 60.

In the present embodiment, the link member 80 is attached to the inner portion 22 of the upper rail 20, to be specific, attached to a front end portion side of the inner portion 22 of the upper rail 20. The link member 80 moves integrally with the upper rail 20 when the upper rail 20 slidably moves. It is noted that a portion of the link member 80 to which the operation lever LB is attached (hereinafter, "lever attachment portion 82") extends upward. While the upper rail 20 is slidably moving, the link member 80 is in a state in which an end portion of the lever attachment portion 82 in which an attachment hole 82a is formed is outside of the inner space IS of the lower rail 40 via the slit 48, as shown in FIG. 5.

It is a fastening pin 100 serving as a fastening member that achieves fastening of the link member 80 to the upper rail 20. Structures of the link member 80 and the fastening pin 100 will be described later in detail.

Configurations of the respective components of the slide rail mechanism 4, that is, the lower rail 40, the upper rail 20, the unlocking mechanism 60, and the link member 80 will be described in detail below.

### (Lower rail 40)

The lower rail 40 is fixed to the vehicle body floor, and, as previously described, a pair of the lower rails 40 is arranged in the width direction of the vehicle seat S with the gap kept therebetween. Since the paired lower rails 40 are configured generally bilaterally symmetric, only the structure of the lower rail 40 on one end side in the width direction will be described hereinafter.

In the present embodiment, the lower rail 40 is formed integrally by the resin material and configured so that longitudinal both ends are open ends. The material of the lower rail 40 is not limited to the resin material and the other material such as metal may be used. Furthermore, the lower rail 40 is a hollow body, and has a closed cross-section structure that is generally rectangular in a front view as shown in FIG. 8. That is, the inner space IS generally rectangular in a front view is formed in the lower rail 40, and the inner space IS is surrounded by the upper wall 42, a pair of right and left sidewalls 44, and the bottom wall 46.

The upper wall 42 is a portion having an upper surface that is the outer surface 42t of the upper wall 42 on which the outer portion 24 of the upper rail 20 slides. The slit 48 is formed in a central portion of the upper wall 42 in the width direction to range from a front end to a back end of the lower rail 40 along a slidably movement direction of the upper rail 20. Furthermore, in the lower rail 40 according to the present embodiment, lower rail-side engagement portions 42a are formed by bending downward both end portions of the upper wall 42 in the width direction into a generally L-shape, and engagement grooves 42b are formed in a lower surface of the upper wall 42 in regions adjacent to the respective lower rail-side engagement portions 42a, as shown in FIG. 8.

The bottom wall 46 is a portion fixed to the vehicle body floor. While the bottom wall 46 is formed slightly thicker than the upper wall 42 and the sidewalls 44, lower corners of the bottom wall 46 are chamfered for reducing a weight. In the lower rail 40 according to the present embodiment, of the inner surface 46s of the bottom wall 46, a central portion in the width direction is concave downward as shown in FIG. 8. That is, stepped portions 46a are formed in the bottom wall 46 and a concave groove 46b is formed between the stepped portions 46a. This concave groove 46b is formed to range from the front end to the back end of the lower rail 40.

As previously described, when the upper rail 20 slidably moves to the lower rail 40, the inner portion 22 of the upper rail 20 slides on the inner surface 46s of the bottom wall 46. At this time, a part of the inner potion 22 (to be specific, a stopped portion 28 to be described later) moves in the concave groove 46b in a state of being fitted into the concave groove 46b.

Moreover, as shown in FIG. 8, in the lower rail 40 according to the present embodiment, a generally rectangular parallelepiped convex portion 46c is formed at a position slightly closer to a back end side than to a front end of the concave groove 46b. This convex portion 46c, which corresponds to another restriction portion according to the present invention, is provided in the inner space IS of the lower rail 40. The convex portion 46c is intended to restrict the portion of the upper rail 20 that is inserted into the inner space IS from being detached from the front end side of the lower rail 40 to the outside of the inner space IS.

The convex portion 46c is specifically described. When the upper rail 20 reaches a front-side limit position (corresponding to a position of the other end according to the present invention) in a slidable movement range of the upper rail 20, the convex portion 46c stops the stopped portion 28 provided on a lower surface of the inner portion 22 of the upper rail 20 in the inner space IS of the lower rail 40. In other words, the front-side limit position in the slidable movement range of the upper rail 20 is a position at which the convex portion 46c stops the stopped portion 28, and is a position of the upper rail 20 shown in FIG. 10A.

The paired right and left sidewalls 44 are located on respective sides of the inner space IS of the lower rail 40 and stand generally perpendicularly to the upper wall 42 and the bottom wall 46. In other words, the upper wall 42 and the bottom wall 46 correspond to adjacent walls adjacent to the respective sidewalls 44 in a state in which the upper wall 42 and the bottom wall 46 cross the sidewalls 44, respectively.

Furthermore, as shown in FIG. 8, a bulging portion 44a bulging outward is formed in a central portion of an outer surface 44t of each sidewall 44 in the upper to lower direction. This bulging portion 44a is formed to range from the front end to the back end of the lower rail 40.

Meanwhile, in the lower rail 40 according to the present embodiment as shown in FIGS. 8 and 9, a gear forming portion 50 extending from the front end to the back end of the lower rail 40 is provided on each of the upper wall 42 and the bottom wall 46 near each corner of the inner space IS. Rectangular wave-shaped lower rail-side gears 52 are formed in these gear forming portions 50 to range from a position located slightly closer to the back end than to the front end to a portion located slightly closer to the front end than to the back end.

The lower rail-side gear 52 corresponds to a fixed rail-side gear, and is engaged with a locking gear 66 provided on the unlocking mechanism 60 to be described later. A plurality of lower rail-side gears 52 are formed so as to be aligned in a longitudinal direction of the lower rail 40, that is, along the slidable movement direction of the upper rail 20. In the present embodiment, the lower rail-side gears 52 are made of a resin material and formed integrally with the other components of the lower rail 40. However, the material of the lower rail-side gears 52 is not limited to this and only the gear forming portions 50 of the lower rail 40 may be made of a material such as metal different from that of the other components.

In the present embodiment, a stopper protrusion 54 formed to protrude from the inner surface 44s of the sidewall 44 is provided at a position slightly closer to the front end of the lower rail 40 than to the back end thereof in a gap formed between the gear forming portions 50 opposite to each other in the upper to lower direction. This stopper protrusion 54, which corresponds to a restriction portion according to the present invention, is intended to restrict the portion of the upper rail 20 that is inserted into the inner space IS of the lower rail 40 from being detached from the back end side to the outside of the inner space IS.

The stopper protrusion 54 will be described specifically. When the upper rail 20 reaches a back-side limit position in the slidable movement range of the upper rail 20 (corresponds to a position of one end according to the present invention), the stopper protrusion 54 stops the stopped member attached to the inner portion 22 of the upper rail 20 in the inner space IS of the lower rail 40. In other words, the back-side limit position in the slidable movement range of the upper rail 20 is a position at which the stopper protrusion 54 stops the stopped member attached to the upper rail 20, and is a position of the upper rail 20 shown in FIG. 10B. The stopped member attached to the upper rail 20 will be described later in detail.

The stopper protrusion 54 is formed to protrude from the inner surface 44s of each sidewall 44. This means that the sidewall 44 is thicker at the position at which the stopper protrusion 54 is formed in the front to back direction than at the other positions. In other words, the sidewall 44 is thinner at positions at which the stopper protrusion 54 is not formed in the front to back direction than that at which the stopper protrusion 54 is formed, and the sidewall 44 at the positions is lower in rigidity accordingly. On the other hand, in the lower rail 40 according to the present embodiment, the bulging portion 44a bulging outward from the outer surface 44t of the sidewall 44 is formed, and the thickness of the sidewall 44 is secured by as much as a bulging amount of the bulging portion 44a. Owing to this, even if the rigidity of the sidewall 44 decreases at the positions at which the stopper protrusion 54 is not formed in the front to back direction due to the smaller thickness of the sidewall 44 at those positions, the reduced rigidity can be compensated by the bulging portion 44a.

Moreover, in the present embodiment, the stopper protrusion 54 is made of a resin material and formed integrally with the other portions of the lower rail 40. Furthermore, as shown in FIG. 8, the stopper protrusions 54 are provided on both ends of the inner space IS in the width direction, respectively, and each of the stopper protrusions 54 is formed to couple the gear forming portions 50 on the upper wall 42 and the bottom wall 46 with each other. That is, in the present embodiment, the stopper protrusions 54 are located in corners formed by the sidewalls 44 and the upper wall 42 and those formed by the sidewalls 44 and the bottom wall 46, respectively. The rigidity of the stopper protrusions 54 improve per se since the stopper protrusions 54 are attached to not only the sidewalls 44 but also both of the walls (upper wall 42 and the bottom wall 46 to be specific) adjacent to the sidewalls 44, respectively.

Furthermore, in the present embodiment, each stopper protrusion 54 is formed to extend from a front end surface of the upper rail 20 that abuts on the above-described stopped member at a time of arrival at the back-side limit position in the slidable movement range to the back end of the lower rail 40 along the longitudinal direction of the lower rail 40, that is, along the slidable movement direction of the upper rail 20. On the other hand, the plurality of lower rail-side gears 52 formed in the gear forming portions 50 are aligned along the slidable movement direction of the upper rail 20. Since the alignment direction of the lower rail-side gears 52 is along the formation direction of the stopper protrusions 54 as described above, the rigidities of both the lower rail-side gears 52 and the stopper protrusions 54 improve in the present embodiment.

Moreover, since the bulging portion 44a is formed to range from the front end to the back end of the lower rail 40, the bulging portion 44a is formed even at the position at which the stopper protrusion 54 is formed in the front to back direction. Furthermore, as shown in FIG. 8, the bulging portion 44a is formed in a range in which the stopper protrusion 54 is formed in the upper to lower direction or, more simply, in a range from an upper end to a lower end of the stopper protrusion 54. Since the sidewall 44 is thicker in the portion in which the stopper protrusion 54 is formed by as much as the provision of the bulging portion 44a on the outer surface 44t of the sidewall 44, the rigidity of the stopper protrusion 54 improves. As a result, the stopper protrusion 54 can stably stop the stopped member attached to the upper rail 20.

In the inner space IS of the lower rail 40 configured as described above, the lower rail-side gears 52 are formed in a row at positions inward of the stopper protrusions 54 provided on the both ends of the inner space IS in the width direction. Particularly in the present embodiment, rows of the lower rail-side gears 52 are formed on one end side and the other end side in the width direction, respectively.

In the present embodiment, it has been described that each of the stopper protrusions 54 is made of the resin material similarly to the other portions of the lower rail 40, and formed integrally with the other portions. However, the present invention is not limited to this, and only the stopper protrusions 54 may be made of a different material, e.g., metal from those of the other portions.

### (Upper rail 20)

As previously described, the upper rail 20 includes the inner portion 22, the outer portion 24, and the upright portion 26. In the present embodiment, any of these portions is made of the resin material and formed integrally with the others. However, the present invention is not limited to this. The inner portion 22, the outer portion 24, and the upright portion 26 may be formed separately and combined together in a later process, or may be formed of different materials.

As shown in FIG. 11, the inner portion 22 is a long hollow body having a square-shaped cross-section, that is, of a closed cross-section structure. To be strict, all portions of the inner portion 22 but a back end portion in which a spring retaining notch 22d is formed have closed cross-sections in a normal direction that is assumed as the slidable movement direction of the upper rail 20. That is, the inner portion 22 according to the present embodiment includes a region having the closed cross-section in the normal direction that is the slidable movement direction.

As described above, according to the present embodiment, the inner portion 22 is slightly higher in rigidity than that of a non-closed cross-section structure since at least a part of the inner portion 22 has the closed cross-section structure. For purposes of improving the rigidity, the inner portion 22 may alternatively include a region having a solid cross-section in the normal direction that is the slidable movement direction. Nevertheless, the inner portion 22 of the closed cross-section structure is preferable in order to provide the lighter vehicle seat S.

In a state in which the inner portion 22 is inserted into the inner space IS of the lower rail 40, the inner portion 22 is located between the stopper protrusions 54 provided respectively on the both ends of the inner space IS of the lower rail 40 in the width direction. More specifically, as shown in FIG. 6, the upper rail 20 is located between the rows of the lower rail-side gears 52 present respectively on one end side and the other end side in the width direction. That is, when the upper rail 20 slidably moves to the lower rail 40, the inner portion 22 moves in a space located between the rows of the lower rail-side gears 52 in the width direction in the inner space IS.

In other words, in the present embodiment, combinations of the lower rail-side gears 52 and the locking gears 66 are arranged at positions on both sides of the inner portion 22 in the width direction in the inner space IS of the lower rail 40, respectively. In this way, the lower rail-side gears 52 are engaged with the locking gears 66 on one end side and the lower rail-side gears 52 are engaged with the locking gears 66 on the other end side with a gap kept in the width direction. As a result, it is possible to stably keep the engagement states of the gears 52 and 66 on one end side and the other end side in the width direction in the inner space IS. It is noted that the width direction corresponds to a direction crossing the slidable movement direction.

Furthermore, as shown in FIG. 6, the inner portion 22 in the state of being inserted into the inner space IS of the lower rail 40 is located right under the slit 48 formed in the upper wall 42 of the lower rail 40, and a length of the inner portion 22 in the width direction is slightly larger than that of the slit 48. As can be seen, according to the present embodiment, the shape of the inner portion 22 can be designed to the shape favorable for improving the rigidity of the inner portion 22 by making effective use of the space located between the rows of the lower rail-side gears 52 in the width direction in the inner space IS.

More specifically, the length of the inner portion 22 in the width direction is slightly larger than a width of the slit 48. In other words, protruding portions 22g protruding outward of both edges of the slit 48 in the width direction are provided on an upper end portion of the inner portion 22. By providing the protruding portions 22g, the rigidity of the inner portion 22 of the closed cross-section structure further improves.

Furthermore, in the present embodiment, a height of the inner portion 22 is slightly smaller than that of the inner space IS of the lower rail 40 (to be specific, a distance between a lower surface of the upper wall 42 and an upper surface of the bottom wall 46). Therefore, in the state in which the inner portion 22 is inserted into the inner space IS of the lower rail 40, the protruding portions 22g are located right under the upper wall 42 of the lower rail 40 and opposed to portions of the upper wall 42 that are adjacent to the slit 48, respectively. As a result, even if an external force acts on the inner portion 22 to incline the inner portion 22 with respect to the lower rail 40 so that one end (the other end) is located upward of the other end (one end) in the width direction, it is possible to prevent the inner portion 22 from being inclined since the protruding portions 22g are stopped by the upper wall 42.

Moreover, the protruding portions 22g are located between the rows of the lower rail-side gears 52 in the width direction. In other words, the lower rail-side gears 52 are provided outward of the inner portion 22 of the closed cross-section structure in the width direction. It is thereby possible to keep longer the distance between the lower rail-side gears 52 in the width direction, and to stably keep the state in which each lower rail-side gear 52 is engaged with the locking gear 66.

Furthermore, the inner portion 22 includes the stopped portion 28 that is a convex portion of a generally rectangular parallelepiped in the central portion of the lower surface of the inner portion 22 in the longitudinal direction. This stopped portion 28 functions as a retaining portion that restricts the inner portion 22 from being detached from the front end of the lower rail 40 to the outside of the inner space IS. When the upper rail 20 slidably moves to the lower rail 40, the inner portion 22 slides on the inner surface 46s of the bottom wall 46 in a state in which the stopped portion 28 is fitted into the concave groove 46b formed in the bottom wall 46 of the lower rail 40.

That is, when the upper rail 20 moves slidably, the stopped portion 28 moves in the concave groove 46b along the formation direction of the concave groove 46b, i.e., moves while being guided by the concave groove 46b. This restricts the movement direction of the upper rail 20. As a result, the upper rail 20 can stably move slidably along the lower rail 40.

In the present embodiment, as shown in FIG. 11, the stopped portion 28 is formed to fall within inner sides of the both ends of the inner portion 22 in the width direction so as to prevent an increase in the size of the slide rail mechanism 4. Furthermore, the inner portion 22 has the closed cross-section structure and the stopped portion 28 is provided on the lower surface of the inner portion 22, so that the rigidity of the stopped portion 28 can improve per se.

Moreover, a rotational-shaft attachment hole (not shown) for attaching a rotational shaft 62 of the unlocking mechanism 60, to be described later, is formed in the longitudinally central portion of the outer side surface 22a of the inner portion 22. In the present embodiment, the stopped portion 28 described above is provided to cover a formation position of the rotational-shaft attachment hole in the longitudinal direction of the upper rail 20 so as to suppress a reduction in the rigidity of the upper rail 20 due to the formation of the rotational-shaft attachment hole.

Furthermore, a lock guide portion 22b having a generally U-shaped in a side view is formed to protrude from a region around the rotational-shaft attachment hole on the outer side surface 22a of the inner portion 22. A slot groove 22c having a generally rectangular shape in a plan view is formed in this lock guide portion 22b, and a lock member 64 of the unlocking mechanism 60, to be described later, is contained in this slot groove 22c in a state in which the lock member 64 is movable only in the upper to lower direction. That is, the lock guide portion 22b restricts the lock member 64 from moving in the front to back direction and the right to left direction (width direction) while allowing the lock member 64 to move in the upper to lower direction.

A structure of the lock guide member 22b will be described. As shown in FIG. 12, the lock guide member 22b includes a pair of slot-groove forming portions 30, the slot groove 22c, and a lock-member stopper portion 32. The paired slot-groove forming portions 30 and the lock-member stopper portion 32 are attached to a base portion 34 having a rectangular shape in a side view and protruding outward from the outer side surface 22a of the inner portion 22.

The paired slot-groove forming portions 30 are formed linearly along the upper to lower direction, and restrict front ends and back ends of the slot grooves 22c aligned at intervals in the longitudinal direction of the upper rail 20. In other words, the slot grooves 22c are formed by gaps between the slot-groove forming portions 30.

The lock-member stopper portion 32 couples the slot-groove forming portions 30 to each other on an opposite side to that on which openings of the slot grooves 22c are located, and closes an opposite end to the openings of the slot grooves 22c. Therefore, when the lock members 64 move to positions at which the lock members 64 abut on the lock-member stopper portion 32 in the slot grooves 22c, the lock-member stopper portion 32 stops the lock members 64 and restricts the lock members 64 from further moving in the same direction as that in which the lock members 64 move so far. In the present embodiment, rigidities of the respective slot-groove forming portions 30 improve by coupling the slot-groove forming portions 30 to each other by the lock-member stopper portion 32.

In the present embodiment, the lock guide portion 22b of the structure described above is integrated with the inner portion 22. That is, the lock guide portion 22b according to the present embodiment is formed integrally with the other portions of the upper rail 20 by the resin material as a part of the upper rail 20. In this way, the lock guide portion 22b is integrated with the upper rail 20, which can contribute to decreasing the number of components and further to improving the rigidities of the upper rail 20 and the lock guide portion 22b. However, the lock guide portion 22b is not limited to a case where the lock guide portion 22b is integrated with the upper rail 20 and may be provided separately from the upper rail.

In the present embodiment, two lock guide portions 22b are provided at positions around the rotational-shaft attachment hole and symmetrical with each other in the upper to lower direction and the front to back direction. More specifically, the lock guide portion 22b located further forward is provided so that the openings of the slot grooves 22c are located upward of the lock guide portion 22b. The lock guide portion 22b located on further backward is provided so that the openings of the slot grooves 22c are located downward of the lock guide portion 22b.

Moreover, in the present embodiment, as shown in FIG. 7, the two lock guide portions 22b are provided at an interval in the front to back direction, and the interval corresponds to a magnitude that allows a shaft attachment portion 68a provided on a rotational arm 68 of the unlocking mechanism 60, to be described later to be arranged.

Furthermore, in the present embodiment, as shown in FIG. 15, for example, the two lock guide portions 22b are provided on the outer side surface 22a that the inner portion 22 has on one end side and on the outer side surface 22a that the inner portion 22 has on the other end side, respectively.

A pin attachment hole (not shown) for attaching the fastening pin 100, to be described later, is formed in a front end portion of each of the outer side surfaces 22a of the inner portion 22.

Moreover, as shown in FIG. 13, the spring retaining notch 22d for retaining an urging spring 110, to be described later, with the urging spring 110 caught up in the spring retaining notch 22d is formed in a lower portion of the rear end portion of the inner portion 22. A spring stopper portion 22e of a generally L-shape caught up with the urging spring 110 so that the urging spring 110 is spread along the outer side surface 22a is formed to protrude from the rear end portion of the outer side surface 22a of the inner portion 22.

The outer portion 24 is formed into a downward U-shape in a front view, and covers the upper wall 42 of the lower rail 40. Upper rail-side engagement portions 24a formed by folding back into hook shapes are provided on both end portions of the upper wall 42 of the outer portion 24 in the width direction, respectively. When the upper rail 20 is assembled with the lower rail 40, the hook-shaped upper rail-side engagement portions 24a are caught up in the lower rail-side engagement portions 42a formed on the respective end portions of the upper wall 42 of the lower rail 40 , whereby the engagement portions 24a are engaged with the engagement portions 42a, respectively.

In a state in which the engagement portions 24a and 42a are engaged with one another, the upper rail-side engagement portions 24a enter between tip end portions of the lower rail-side engagement portions 42a and the bulging portions 44a described above and tip end portions of the upper rail-side engagement portions 24a are fitted into the engagement grooves 42b described above. With this configuration, the engagement state between the upper rail-side engagement portions 24a and the lower rail-side engagement portions 42 is intensified. Provided that both the upper rail-side engagement portions 24a and the lower rail-side engagement portions 42 are to be warped upward so as to cancel the engagement state, it is possible to suppress cancelation of the engagement state since the upper rail-side engagement portions 24a are stopped by the bulging portions 44a in the middle of warping.

More specifically, in the state in which the inner portion 22 of the upper rail 20 is inserted into the inner space IS of the lower rail 40, the outer portion 24 is arranged at a position upward of the slit 48 and outside of the inner space IS. The outer portion 24 includes an opposed region 24d opposed to the upper surface of the upper wall 42 of the lower rail 40 in a central portion in the width direction, and the hook-shaped upper rail-side engagement portions 24a provided on the both end portions in the width direction, respectively.

The upper rail-side engagement portions 24a will be described herein in detail. As shown in FIG. 11, each of the upper rail-side engagement portions 24a includes a first extension region 24e extending downward, a second extension region 24f extending horizontally along the width direction, and a third extension region 24g extending upward. The first extension region 24e extends downward at a position adjacent to an end portion of the opposed region 24d in the width direction and, in the present embodiment, extends up to a lower end position of the upper wall 42 of the lower rail 40. This first extension region 24e is opposed to an end surface of the upper wall 42 of the lower rail 40 in the width direction. More specifically, the first extension region 24e is opposed to an outer side surface of the lower rail-side engagement portion 42a formed by being bent into a generally L-shape on the end portion of the upper wall 42 in the width direction. The first extension region 24e thereby restricts the upper wall 42 from being deformed so that the slit 48 is wider in the width direction (to be specific, the upper wall 42 moves in a direction indicated by each arrow in FIG. 6).

By restricting the upper wall 42 from being deformed so that the slit 48 is wider in the width direction as described above, it is possible to suppress the inner portion 22 of the upper rail 20 from being detached from the slit 48 in the state in which the inner portion 22 is inserted into the inner space of the lower rail 40. More specifically, the external force acts on the outer portion 24 of the upper rail 20 from a seatbelt or the like, and this external force causes the inner portion 22 of the upper rail 20 to abut on the inner surface of the upper wall 42 of the lower rail 40, particularly on portions located on both sides of the slit 48. If the lower rail 40 is deformed so that the slit 48 is wider in response to an abutment force from the inner portion 22 of the upper rail 20, the inner portion 22 is possibly detached from the wider slit 48.

In the present embodiment, by contrast, the first extension region 24e that is opposed to the lower rail-side engagement portion 42a of the upper wall 42 outward in the width direction restricts the upper wall 42 from being deformed so that the slit 48 is wider in the width direction. It is, therefore, possible to suppress the inner portion 22 from being detached from the slit 48 described above.

Of the upper rail-side engagement portion 24a, the second extension region 24f is a portion extending toward the lower rail 40 in the width direction at a position adjacent to a lower end portion of the first extension region 24e. By providing this second extension region 24f in the state of being adjacent to the lower end portion of the first extension region 24e, the rigidity of the first extension region 24e improves and the effect of restricting the deformation of the upper wall 42 by the first extension region 24e can be exhibited more effectively.

The third extension region 24g is a portion extending upward at a position adjacent to an opposite end portion of the second extension region 24f to a side on which the first extension region 24e is located in the width direction. In the present embodiment, the third extension region 24g extends toward the above-described engagement groove 42b formed in the lower surface of the upper wall 42 of the lower rail 40. This engagement groove 42b is located on the end portion of the lower surface of the upper wall 42 in the width direction and corresponds to a concave portion formed by being recessed upward. An upper end portion of the third extension region 24g is fitted into the engagement groove 42b. It is thereby possible to further improve the rigidity of surroundings of the first extension region 24e and to further effectively exhibit the effect of suppressing the deformation of the upper wall 42 by the first extension region 24e.

Moreover, the engagement groove 42b is formed to range from the front end to the back end of the lower rail 40 along the slidable movement direction of the upper rail 20. During the slidable movement of the upper rail 20, the upper end portion of the third extension region 24g moves in the engagement groove 42b along the groove 42b. In this way, the upper end portion of the third extension region 24g is guided by the engagement groove 42b, whereby the upper rail 20 can slidably move along the lower rail 40 in a more stable state.

On the other hand, the above-described bulging portion 44a is formed on the outer surface 44t of each of the side walls 44 corresponding to the end surface in the width direction. This bulging portion 44a is located in a central portion of the outer surface 44t of the sidewall 44 in the upper to lower direction, and formed to range from the front end to the back end of the lower rail 40. More specifically, the bulging portion 44a is provided at a position opposed to the second extension region 24f in the upper to lower direction. The bulging portion 44a thereby stops the end portion of the second extension region 24f on the side on which the third extension region 24g is located in the width direction when the end portion thereof moves downward. That is, the bulging portion 44a prevents the engagement of the lower rail-side engagement portion 42a with the upper rail-side engagement portion 24a from being cancelled by restricting the end portion of the second extension region 24f on the side on which the third extension region 24g is located in the width direction from moving downward.

As described above, in the present embodiment, the bulging portion 44a restricts the movement of the second extension region 24f, whereby the good engagement state between both the engagement portions 42a and 24a can be kept. As a result, the upper rail 20 moves slidably along the lower rail 40 in the more stable state.

In the present embodiment, substantially the entirety of the upper rail 20 including the first extension region 24e, the second extension region 24f, and the third extension region 24g is formed integrally by the resin material. On the other hand, of the lower rail 40, the portion such as the lower rail-side engagement portion 42a or the bulging portion 44a, opposed to one of the first extension region 24e, the second extension region 24f, and the third extension region 24g is formed integrally by the resin material. Therefore, the respective extension regions 24e, 24f, and 24g constituting the upper rail-side engagement portion 24a restrict generation of abnormal noise when abutting on (interfering with) the corresponding portions of the lower rail 40. It is noted, however, the first extension region 24e, the second extension region 24f, and the third extension region 24g and the regions of the lower rail 40 corresponding to these extension regions 24e, 24f, and 24g may be made of a material such as metal other than the resin material.

Moreover, generally L-shaped spring stopper portions 24c for fixing an urging spring 120, to be described later, with the urging spring 120 caught up in the sprint stopper portions 24c are formed to protrude from portions of the upper surface of the upper rail 20 located backward of a portion in which a link support portion 24b is provided. The height adjustment mechanism 5 interposes between the seat cushion frame 2 and each upper rail 20, and the link support portion 24b for supporting a lower end portion of a link 5a operating when the height adjustment mechanism 5 makes a height adjustment is provided on the upper surface of the outer portion 24. In the present embodiment, as shown in FIG. 13, the link support portion 24b is provided at a position at which the link support portion 24b overlaps with the lock guide portion 22b (the lock guide portion 22b located further backward, to be strict) described above in the longitudinal direction of the upper rail 20. As a result, the rigidity of the lock guide portion 22b improves.

### (Unlocking mechanism 60)

As shown in FIG. 11, the unlocking mechanism 60 is attached to each of the outer side surface 22a on one end side of the inner portion 22 of the upper rail 20 and that on the other end side thereof. The unlocking mechanism 60 attached to the outer side surface 22a on one end side and that attached to the outer side surface 22a on the other end side are bilaterally symmetric and generally identical in structure.

As already described, each of the unlocking mechanisms 60 is attached outward of the outer side surface 22a of the inner portion 22 of the upper rail 20. When the upper rail 20 slidably moves relatively to the lower rail 40, the unlocking mechanisms 60 passes through an inside of the stopper protrusion 54 provided on each of the both ends of the inner space IS of the lower rail 40 in the width direction. That is, during the slidable movement of the upper rail 20, the unlocking mechanism 60 does not interfere with the stopper protrusion 54 in the inner space IS of the lower rail 40.

As shown in FIG. 14, each unlocking mechanism 60 includes the rotational arm 68 rotating about the rotational shaft 62, the lock member 64 moving in the upper to lower direction in proportion to a rotational movement of the rotational arm 68, and the locking gears 66 formed on the lock member 64 as main constituent elements. In the present embodiment, the respective members constituting the unlocking mechanism 60 are made of the resin material. However, the present invention is not limited to this, and the respective members constituting the unlocking mechanism 60 may be made of a material such as metal other than the resin material.

As shown in FIG. 16(A), a state in which the locking gears 66 are engaged with the lower rail-side gears 52 is the state in which the upper rail 20 is slidably immovable relatively to the lower rail 40, that is, the locked state. On the contrary, as shown in FIG. 16(B), the state in which the locking gears 66 are disengaged from the lower rail-side gears 52 is the state in which the upper rail 20 is slidably movable relatively to the lower rail 40, that is, the unlocked state.

The unlocking mechanism 60 according to the present embodiment executes an unlocking operation for switching the state of the locking gears 66 from the locked state in which the locked gears 66 are engaged with the lower rail-side gears 52 to the unlocked state in which the locking gears 66 are disengaged from the lower rail-side gears 52 by the rotational operation of the rotational arm 68.

As already described, the unlocking mechanisms 60 are attached to both of the outer side surfaces 22a of the inner portion 22 of the upper rail 20, respectively, the rotational arm 68 of each of the unlocking mechanisms 60 is assembled into the inner portion 22 via the rotational shaft 62. In the present embodiment, the two rotational arms 68 share one rotational shaft 62. Specifically, the rotational shaft 62 is arranged while penetrating the longitudinally central portion of the inner portion 22 so that end portions of the rotational shaft 62 protrude from the respective outer side surfaces 22a of the inner portion 22, and the shaft attachment portions 68a of the rotational arms 68 are assembled with the respective end portions of the rotational shaft 62. By sharing one rotational shaft 62 between the two rotational arms 68 as described above, the number of components can be decreased.

Moreover, in the present embodiment, the end portions of the rotational shaft 62 supporting the rotational arms 68 protrude from portions of the respective outer side surfaces 22a of the inner portion 22 located between the two lock guide portions 22b. By setting the rotational shaft 62 in such a positional relation, it is possible to further reduce the size of the slide rail mechanism 4.

A specific configuration in which each of the unlocking mechanisms 60 executes an unlocking operation will now be described.

As shown in FIG. 14, the rotational arm 68 is a plate member having a generally diamond shape in a side view. In the present embodiment, the rotational arm 68 is made of the resin material. The shaft attachment portion 68a to which the rotational shaft 62 is attached is provided in a central portion of this rotational arm 68, and arm main bodies 68b and 68c are provided on both sides of the shaft attachment portion 68a, respectively. As shown in FIG. 15, the arm main bodies 68b and 68c are located outward of the shaft attachment portion 68a in the width direction when the unlocking mechanism 60 is attached to the outer side surface 22a of the inner portion 22, and structures of the arm main bodies 68b and 68c are point symmetrical about the rotational shaft 62.

A structure of the rotational arm 68 will be described in detail. The rotational arm 68 has a bent structure so as to form a stepped portion between the shaft attachment portion 68a and the arm main bodies 68b and 68c when viewed from above. By adopting such a bent structure, the rigidity of the rotational arm 68 improves.

The rotational arm 68 is bent-shaped as described above. Owing to this, as shown in FIG. 15, in a state in which unlocking mechanism 60 is attached to the outer side surface 22a of the inner portion 22, the shaft attachment portion 68a of the rotational arm 68 abuts on the outer side surface 22a of the inner portion 22 whereas the arm main bodies 68b and 68c are arranged with a gap given from the outer side surface 22a of the inner portion 22 in the width direction. In the gap between the arm main bodies 68b and 68c and the outer side surface 22a of the inner portion 22, the lock guide portion 22b and the lock member 64 described above are arranged.

A through-hole (not shown) is formed in the shaft attachment portion 68a. By inserting the end portion of the rotational shaft 62 protruding from the outer side surface 22a of the inner portion 22 into this through-hole, the rotational arm 68 is supported by the rotational shaft 62. In the present embodiment, in particular, a portion of the end portion of the rotational shaft 62 protruding from the through-hole falls within the stepped portion between the shaft attachment portion 68a and the arm main bodies 68b and 68c. In other words, the end portion of the rotational shaft 62 is located inward of (closer to the inner portion 22 than) the arm main bodies 68b and 68c. It is thereby possible to further reduce the size of the slide rail mechanism 4.

Furthermore, as shown in FIG. 14, the end portion of the rotational shaft 62 has a circular cross-section and the shaft attachment portion 68a is generally circular accordingly. In other words, of the rotational arm 68, the portion corresponding to the shaft attachment portion 68a is recessed into a cylindrical shape with respect to the arm main bodies 68b and 68c so that an outer edge of the portion is along a profile of the end portion of the rotational shaft 62. By adopting such a shape, the rotational arm 68 can be reduced in size.

Each of the arm main bodies 68b and 68c has a tapered shape such that each of the arm main bodies 68b and 68c is narrower toward a tip end portion thereof. By adopting such a tapered shape, it is possible to reduce the weight of the rotational arm 68 and to suppress the rotational arm 68 from interfering with the lower rail 40 during the rotation of the rotational arm 68.

Moreover, a rectangular through-hole 68d is formed at a halfway position in each of the arm main bodies 68b and 68c. By fitting an engagement protrusion 64a formed in the lock member 64, to be described later, into this through-hole 68d, the lock member 64 is engaged with each of the arm main bodies 68b and 68c of the rotational arm 68.

Meanwhile, as described above, the two lock guide portions 22b are formed on the respective outer side surfaces 22a of the inner portion 22 of the upper rail 20 with the gap given therebetween so that the shaft attachment portions 68a of the rotational arms 68 can be arranged in the gap. In other words, the two lock guide portions 22b are formed at positions as close to each other as possible while securing the space, in which the shaft attachment portions 68a can be arranged, between the lock guide portions 22b. Owing to this, the distance between the lock members 64 stored in the slot groove 22c formed in each lock guide portion 22b is reduced, and the distance between the arm main bodies 68b and 68c engaged with the lock members 64 is eventually reduced. As a result, it is possible to further reduce the size of the rotational arm 68.

Furthermore, a cylindrical protrusion 68e extending from the inner side surface of the arm main body 68b opposed to the inner portion 22 toward the outer side surface 22a of the inner portion 22 is provided in a tip end portion of the arm main body 68b located further forward out of the arm main bodies 68b and 68c. This cylindrical protrusion 68e is a portion abutting on an abutment portion 84a formed on each of link main bodies 84 of the link member 80 to be described later. By forming the above-described cylindrical protrusion 68e on the tip end portion of the arm main body 68b, it is possible to improve the rigidity of the end portion of the rotational arm 68.

Moreover, in the present embodiment, since the cylindrical protrusion 68e is provided on the inner side surface of the arm main body 68b, the rotational arm 68 can be made smaller in size than the configuration provided on the outer side surface of the arm main body 68b. By providing the above-described cylindrical protrusion 68e on the inner side surface of the arm main body 68b, a tip end of the cylindrical protrusion 68e abuts on the outer side surface 22a of the inner potion 22 and it is possible to suppress the rotational arm 68 from being further deformed even if, for example, an external force acts on the arm main body 68b of the rotational arm 68 from outward in the width direction. In the present embodiment, the cylindrical protrusion 68e is provided in the front-side arm main body 68b out of the arm main bodies 68b and 68c. Alternatively, the cylindrical protrusion 68e may be provided on the back-side arm main body 68c for suppressing the deformation of the rotational arm 68.

The lock member 64 is provided for each of the arm main bodies 68b and 68c. In the following description, the lock member 64 provided for the front-side arm main body 68b is also referred to as "front-side lock member 64", and the lock member 64 provided for the back-side arm main body 68b is also referred to as "back-side lock member 64". Since the front-side lock member 64 and the back-side lock member 64 are identical in configuration, and arranged generally symmetric about the rotational shaft 62 in the upper to lower direction and the front to back direction.

Specifically, as described above, the lock member 64 has a generally rectangular outer shape, and a plurality of rectangular wave-shaped locking gears 66 is regularly formed on one end portion of the lock member 64 in the upper to lower direction. While the lock member 64 is made of the resin material in the present embodiment, the present invention is not limited to this and the lock member 64 may be made of the other material such as metal.

The lock guide portion 22b is provided in the gap between the arm main body 68b or 68c and the outer side surface 22a of the inner portion 22, and the lock member 64 is contained in the slot grove 22c formed in the lock guide portion 22b in a state in which the lock member 64 is movable in the upper to lower direction. More specifically, a length of the lock member 64 in the front to back direction (i.e., length in the alignment direction of the locking gears 66) is slightly smaller than that of the slot groove 22c in the front to back direction. Therefore, the lock member 64 is contained in the slot groove 22c in the state in which the lock member 64 is movable in the upper to lower direction and immovable in the front to back direction and the right to left direction. In other words, the lock member 64 moves in the upper to lower direction while being guided by the lock guide portion 22b.

In the present embodiment, the lock member 64, the lock guide portion 22b, and the upper rail 20 are all made of the resin material. Owing to this, it is possible to suppress the generation of abnormal noise when the lock member 64 moves in the upper to lower direction while being guided by the lock guide portion 22b or when the lock member 64 contacts the region of the upper rail 20 other than the lock guide portion 22b during movement in the upper to lower direction.

In particular, when the lock member 64 moves in the upper to lower direction toward the lock-member stopper portion 32 in the lock guide portion 22b, the lock member 64 finally abuts on the lock-member stopper portion 32 and is stopped by the lock-member stopper portion 32. Since the lock-member stopper portion 32 is also made of the resin material, it is possible to suppress collision noise generated when the lock member 64 is stopped by the lock-member stopper portion 32.

The lock member 64 is contained in the slot groove 22c so that the end portion thereof on which the locking gears 66 are formed is located near the opening of the slot groove 22c. Note that the slot groove 22c containing the front-side lock member 64 has an open upper end. That is, the locking gears 66 are formed on an upper end portion of the front-side lock member 64, and the front-side lock member 64 is contained in the slot groove 22c so that the upper end portion thereof is located near the opening of the slot groove 22c.

On the other hand, the slot groove 22c containing the back-side lock member 64 has an open lower end. That is, the locking gears 66 are formed on a lower end portion of the back-side lock member 64, and the back-side lock member 64 is contained in the slot groove 22c so that the lower end portion thereof is located near the opening of the slot groove 22c.

As for the lock members 64 contained in the slot grooves 22c in the states described above, the outer side surfaces of the lock members 64 are exposed to the respective arm main bodies 68b and 68c, and the cylindrical engagement protrusions 64a are formed to protrude from exposed surfaces toward the respective arm main bodies 68b and 68c. The engagement protrusions 64a are inserted into the through-holes 68d formed in the respective arm main bodies 68b and 68c.

In this case, each of the engagement protrusions 64a is fitted into the through-hole 68d while no play is provided in the upper to lower direction and slight play is provided in the front to back direction. That is, the rotational arm 68 rotates about the rotational shaft 62 with the engagement protrusion 64a held between deep portions of the through-hole 68d in the upper to lower direction while allowing the engagement protrusion 64a to move relatively to the through-hole 68d in the front to back direction. Therefore, in response to the rotation of the rotational arm 68, the engagement protrusion 64a moves only in the upper to lower direction and the lock member 64 moves in the slot groove 22c only in the upper to lower direction, accordingly.

When the rotational arm 68 is at an ordinary position, the lock member 64 is located at a position most projecting to the outside of the slot groove 22c. When the lock member 64 at such a position, the locking gears 66 formed on the lock member 64 are engageable with the lower rail-side gears 52.

Specifically, when the rotational arm 68 is located at the ordinary position, the front-side lock member 64 is located at a top dead center. At such a position, the locking gears 66 formed on the front-side lock member 64 are located slightly upward of the upper end of the inner portion 22 , and engageable with the lower rail-side gears 52 formed on the gear forming portion 50 provided on the upper wall 42 of the lower rail 40 as shown in FIG. 16A. At this time, the back-side lock member 64 is located at a bottom dead center. At such a position, the locking gears 66 formed on the back-side lock member 64 are located slightly downward of the lower end of the inner portion 22, and engageable with the lower rail-side gears 52 formed on the gear forming portion 50 provided on the bottom wall 46 of the lower rail 40.

When the locking gears 66 are engaged with the lower rail-side gears 52, the upper rail 20 is made into the state in which the upper rail 20 is immovable relatively to the lower rail 40, i.e. , the locked state. Since the locking gears 66 and the lower rail-side gears 52 are both made of the resin material in the present embodiment, it is possible to suppress the generation of abnormal noise when the gears 66 and 52 abut on one another upon being engaged with one another.

On the other hand, if the rotational arm 68 rotates in a predetermined direction (indicated by arrows in FIG. 16(B)), the front-side lock member 64 moves downward and the back-side lock member moves upward accordingly. Each lock member 64 thereby moves in the upper to lower direction to the position at which the lock member 64 can be contained in the slot groove 22c, and the locking gears 66 formed on the lock member 64 retreat from the lower rail-side gears 52. As a result, as shown in FIG. 16(B), the state of the locking gears 66 is switched from the locked state in which the locking gears 66 are engaged with the lower rail-side gears 52 to the unlocked state in which the locking gears 66 are disengaged from the lower rail-side gears 52.

As described so far, the unlocking mechanism 60 according to the present embodiment switches the state of the locking gears 66 from the locked state to the unlocked state by converting the rotational operation of the rotational arm 68 to the upper-to-lower movement of the lock member 64. A conversion mechanism for converting the rotational operation of the rotational arm 68 to the upper-to-lower movement of the lock member 64 is achieved by the through-holes 68d formed in the arm main bodies 68b and 68c of the rotational arm 68, the engagement protrusion 64a protruding from the outer side surface of the lock member 64 and inserted into each through-hole 68d, and the lock guide portion 22b restricting the movement direction of the lock member 64 to the upper to lower direction.

It is noted that a rotation range of the rotational arm 68 corresponds to an upper-to-lower movement range of the lock member 64. Specifically, the position of the rotational arm 68 when the lock member 64 reaches the position at which the lower rail-side gears 52 restrict further movement since the locking gears 66 are engaged with the lower rail-side gears 52 is a position of one end in the rotation range. On the other hand, the position of the rotational arm 68 when the lock member 64 is stopped by the lock-member stopper portion 32 of the lock guide portion 22b is a position of the other end in the rotation range.

In the meantime, in the present embodiment, as already described, the lock member 64 moving in the upper to lower direction for switching the state of the locking gears 66 from the locked state to the unlocked state or from the unlocked state to the locked state is a separate member from the rotational arm 68, and configured to be movable relatively to the rotational arm 68.

Providing that the lock member 64 is integrated with the rotational arm 68 and configured to rotate integrally with the rotational arm 68, the lock member 64 rotates for switching the state of the locking gears 66 from the locked state to the unlocked state. Owing to this, the locking gears 66 also move in the upper to lower direction along the rotational direction, so that the locking gears 66 still engaged with the lower rail-side gears 52 possibly remain even if the state of the locking gears 66 is to be switched to the unlocked state. If the upper rail 20 moves slidably in the state in which the locking gears 66 kept engaged with the lower rail-side gears 52 remain, the locking gears 66 kept engaged with the lower rail-side gears 52 may be damaged.

In the present embodiment, by contrast, the lock member 64 is a separate member from the rotational arm 68 and configured to be movable relatively to the rotational arm 68. The above-described conversion mechanism converts the rotational operation of the rotational arm 68 to the upper-to-lower movement (to be strict, straight-ahead movement in the upper to lower direction) of the lock member 64. This configuration can suppress the problem that the locking gears 66 kept engaged with the lower rail-side gears 52 remain when the state of the locking gears 66 is switched to the unlocked state.

In the present invention, a central portion of the generally inverted-U-shaped urging spring 110 is caught up in and retained in the spring retaining notch 22d formed in the lower portion of the rear end portion of the inner portion 22.

On the other hand, a tip end of the urging spring 110 is retained in the tip end portion (back end portion) of the back-side arm main body 68c out of the rotational arm 68. The urging spring 110 in this state urges the back end portion of the rotational arm 68 downward and keeps the rotational arm 68 at the ordinary position. In other words, the urging spring 110 urges the back end portion of the rotational arm 68 downward so as to keep the state of the locking gears 66 to the locked state. Therefore, the rotational arm 68 is rotated in a predetermined direction against an urging force of the urging spring 110 so as to switch the state of the locking gears 66 from the locked state to the unlocked state.

Furthermore, in the present embodiment, the position at which the rotational shaft 62 of the rotational arm 68 is attached to the inner portion 22 of the upper rail 20 is substantially equal to the position of the convex-shaped stopped portion 28 provided on the lower surface of the inner portion 22 in the front to back direction. The portion of the inner portion 22 located at the position at which the stopped portion 28 is provided in the front to back direction is higher in rigidity and the rotational shaft 62 of the rotational arm 68 is attached to such a portion, so that the rotational arm 68 stably rotates. As a result, it is possible to stably switch the state of the locking gears 66, i.e., the state of the upper rail 20 since the lock member 64 stably moves in the upper to lower direction.

### (Link member 80)

The link member 80 is attached to the front end portion of the inner portion 22 of the upper rail 20. As shown in FIGS. 14 and 15, the link member 80 includes a pair of link main bodies 84 extending along the outer side surfaces 22a of the inner portion 22, a coupling body 86 coupling front end portions of the paired link main bodies 84 to each other, and the above-described lever attachment portion 82. In the present embodiment, the respective components of the link member 80 described above are all made of the resin material, and formed integrally. However, the present invention is not limited to this and the lever attachment portion 82, the link main bodies 84, and the coupling body 86 may be formed separately and assembled together in a later process or may be made of different materials.

The paired link main bodies 84 are portions that rotate about the rotational shaft in a state of holding the inner portion 22 of the upper rail 20 therebetween. That is, the paired link main bodies 84 are rotatably attached to the respective outer side surfaces 22a of the inner portion 22. More specifically, each of the paired link main bodies 84 is long along the front to back direction and an attachment hole (not shown) is formed in a longitudinally central portion. By communicating this attachment hole with the pin attachment hole formed in the outer side surface 22a of the inner portion 20 and then inserting the fastening pin 100 into both of the attachment holes from outside, each link main body 84 is attached to the inner portion 22 in a state in which the link main body 84 is rotatable about the fastening pin 10 that acts as a rotational shaft.

Moreover, the paired link main bodies 84 abut on the front end portions of the corresponding rotational arms 68 out of those provided on both ends of the upper rail 20 in the width direction, respectively. More specifically, as shown in FIGS. 14 and 15, the abutment portion 84a abutting the cylindrical protrusion 68e formed on the front end portion of the front-side arm main body 68b of the corresponding rotational arm 68 is formed in a back end portion of each of the paired link main bodies 84. When the link main body 84 rotates in the predetermined direction (indicated by an arrow in FIG. 14), the abutment portion 84a abuts on the cylindrical protrusion 68e from above to further rotate the link main body 84 and the abutment portion 84a presses down the cylindrical protrusion 68e.

When the abutment portion 84a presses down the cylindrical protrusion 68e, the rotational arm 68 rotates in the predetermined direction. As a result, the lock member 64 moves in the upper to lower direction, and the state of the locking gears 66 is switched from the locked state to the unlocked state.

As for each of the paired link main bodies 84, the front end portion of the link main body 84 is located slightly forward of the front end of the inner portion 22 in a state in which the link main body 84 is attached to the outer side surface 22a of the inner portion 22 of the upper rail 20 by the fastening pin 100. The coupling body 86 couples portions of the respective link main bodies 84 located forward of the front end of the inner portion 22 or particularly forefront end portions thereof in the present embodiment to each other.

The lever attachment portion 82 extends upward from a front end surface of the coupling body 86 and the attachment hole 82a for the operation lever LB is formed in an upper end portion of the lever attachment portion 82. More specifically, the operation lever LB according to the present embodiment is a pipe lever and an end portion (hereinafter, "attachment-side end portion") LBa thereof is fitted into the attachment hole 82a.

On the other hand, as shown in FIG. 17, a notch LBb is formed in an attachment-side end portion LBa of the operation lever LB, and one end portion of a spiral spring UB is stopped on the notch LBb. The attachment-side end portion LBa of the operation lever LB in a state in which the one end portion of the spiral spring UB is formed is fitted into the attachment hole 82a, and the other end portion of the spiral spring UB is then stopped on the front end portion of the lever attachment portion 82 as shown in FIG. 18, thereby attaching the operation lever LB to the lever attachment portion 82.

In a state in which a passenger does not operate the operation lever LB, the operation lever LB attached to the lever attachment portion 82 as described above has an attitude of falling down forward by the urging force of the spiral spring UB as shown in FIG. 19. If the passenger operates the operation lever LB in this state to rotate the operation lever LB against the above-described urging force, the operation is transmitted to the lever attachment portion 82, the coupling body 86, and the link main bodies 84, and finally to the rotational arms 68 of the unlocking mechanism 60.

More specifically, when the passenger operates the operation lever LB, the lever attachment portion 82 previously in an attitude of leaning forward moves to switch the attitude to an attitude of leaning backward. The paired link main bodies 84 and the coupling body 86 rotate to be interlocked with the lever attachment portion 82. When the paired link main bodies 84 rotate, the abutment portions 84a formed in the rear end portions of the respective link main bodies 84 press down the cylindrical protrusions 68e formed in the front end portions of the corresponding rotational arms 68. As a result, as described above, the rotational arms 68 rotate in the predetermined direction, the lock members 64 move in the upper to lower direction to be interlocked with the rotational arms 68, and the state of the locking gears 66 is switched from the locked state to the unlocked state.

As shown in FIG. 18, the rear end portion of the lever attachment portion 82 is notched so as to be inclined in an extension direction of the lever attachment portion 82. A central portion of a generally inverted-U-shaped urging spring 120 is caught up in a notch (hereinafter, "spring retaining notch) 82b. On the other hand, as already described, both end portions of the urging spring 120 are fixed by being stopped by the spring stopper portion 24c formed to protrude from the upper surface of the upper rail 20. The urging spring 120 in this state urges the lever attachment portion 82 forward to make the lever attachment portion 82 in the attitude of leaning forward, that is, to make the abutment portion 84a of each of the link main bodies 84 into a state of retreating from the cylindrical protrusion 68e of the rotational arm 68.

In other words, the urging spring 120 urges the lever attachment portion 82 forward so as to disconnect the link member 80 from the unlocking mechanism 60 when the operation lever LB is not operated. Owing to this, to engage the link member 80 with the unlocking mechanism 60 to drive the unlocking mechanism 60, the operation lever LB is operated to change the lever attachment portion 82 from the attitude of leaning forward to the attitude of leaning backward against the urging force of the urging spring 120.

Meanwhile, in the present invention, the fastening pin 100 fastens the link member 80 to the upper rail 20. This fastening pin 100 is made of a resin material and includes a cylindrical top portion 102 formed to be relatively thick. It is noted that the fastening pin 100 is provided on each of the paired link main bodies 84 so as to fasten each of the paired link main bodies 84 to the outer side surface 22a of the inner portion 22 of the upper rail 20 out of the link member 80. That is, in the present embodiment, two fastening pins 100 are used; one of the fastening pins 100 is attached to the outer side surface 22a on one end side of the inner portion 22 in the width direction, and the other fastening pin 100 is attached to the outer side surface 22a on the other end side thereof.

In a state in which the fastening pins 100 fasten the link member 80 to the upper rail 20, the top portions 102 of the fastening pins 100 slightly protrude outward in the width direction from the outer side surfaces of the inner portion 22 of the upper rail 20 as shown in FIG. 15. More specifically, in the state in which each fastening pin 100 is attached to the outer side surface 22a of the inner portion 22, the top portion 102 of the fastening pin 100 slightly protrudes outward in the width direction from the outer side surface of the rotational arm 68 of the unlocking mechanism 60 attached to the same outer side surface 22a of the inner portion 22.

When the inner portion 22 having the outer side surfaces 22a to each of which the fastening pin 100 is attached is inserted into the inner space IS of the lower rail 40, the top portion 102 of the fastening pin 100 is arranged at a position slightly overlapping with the stopper protrusion 54 in the width direction. Therefore, when the upper rail 20 slidably moves and reaches the back-side limit position, the top portion 102 of each fastening pin 100 is stopped by each of the stopper protrusions 54 provided on both sides of the inner space IS in the width direction, respectively, in the inner space IS of the lower rail 40. As a result of stopping the fastening pin 100 by the stopper protrusion 54 as described above, it is possible to restrict the inner portion 22 from being detached from the back end of the lower rail 40 to the outside of the inner space IS when the upper rail 20 slidably moves.

### «As regards retaining structure of preventing inner portion 22 from being detached to outside of inner space IS of lower rail 40»

As described so far, in the present embodiment, the fastening pins 100 used to fasten the link member 80 to the upper rail 20 are attached to the upper rail 20 as stopped portions. As shown in FIG. 10B, each of the fastening pins 100 is stopped by the above-described stopper protrusion 54 when the upper rail 20 slidably moves and reaches the back-side limit position, thereby making it possible to appropriately suppress the inner portion 22 of the upper rail 20 from being detached from the rear end of the lower rail 40 to the outside of the inner space IS.

In the present embodiment, both the fastening pins 100 and the stopper protrusions 54 are made of a resin material. Owing to this, it is possible to suppress the generation of abnormal noise when the slidably moving upper rail 20 reaches the back-side limit position and each fastening pin 100 collides against the stopper protrusion 54 (i.e., when each fastening pin 100 is stopped by the stopper protrusion 54).

In the present embodiment, the stopper protrusions 54 are integrated with the lower rail 40 and engaged with the respective fastening pins 100 in the inner space IS of the lower rail 40. In the present embodiment, therefore, the retaining member provided on the lower rail 40 so as to restrict the inner portion 22 of the upper rail 20 from being detached to the outside of the inner space IS does not protrude to the outside of the lower rail 40. In other words, in the present embodiment, the retaining member on the lower rail 40 falls within the inner space IS of the lower rail 40, by as much as which the slide rail mechanism 4 is made compact.

While it is described in the present embodiment that the stopper protrusions 54 and the lower rail 40 are integrally formed by the resin material, the present invention is not limited to this and it suffices to integrate the stopper protrusions 54 with the lower rail 40. The stopper protrusions 54 may be formed out of separate members and integrated with the lower rail 40 by adhesively bonding the stopper protrusions 54 to the lower rail 40.

Furthermore, in the present embodiment, the inner portion 22 of the upper rail 20 is arranged in the space between the stopper protrusions 54 in the inner space IS of the lower rail 40 as already described. In other words, the stopper protrusions 54 are located between the sidewalls 44 of the lower rail 40 and the outer side surfaces 22a of the inner portion 22, respectively. On the other hand, the fastening pins 100 serving as the stopped members are attached to the respective outer side surfaces 22a of the inner portion 22, i.e., the respective surfaces opposed to the stopper protrusions 54.

In this way, in the present embodiment, a dead space (gap) is formed between each sidewall 44 of the lower rail 40 and the inner portion 33 of the upper rail 20. If each of the stopper protrusions 54 and each of the fastening pins 100 are located in the dead space in the inner space IS of the lower rail 40, it is possible to make effective use of the inner space IS of the lower rail 40. Moreover, by providing the stopper protrusion 54 so as to be located in the dead space, it is possible to improve the rigidity of the sidewalls 44 in the width direction.

Furthermore, in the present embodiment, each fastening pin 100 abuts on the stopper protrusion 54 on an outer circumferential surface of the cylindrical top portion 102. The stopper protrusion 54, by contrasts, abuts on the top portion 102 of the fastening pin 100 on the front end surface that is a generally perpendicular plane surface. It is noted, however, that an abutment surface of the stopper protrusion 54 abutting on the top portion 102 of the fastening pin 100 is not limited to the perpendicular plane surface and the abutment surface may be a curved surface curved along the top portion 102 of the fastening pin 100. In this case, if the abutment surface of the stopper protrusion 54 is the curved surface, it is possible to disperse an impact load generated when the top portion 102 of the fastening pin 100 collides on the abutment surface, and to suppress the deformation of the stopper protrusion 54 generated after the load locally acts on the stopper protrusion 54.

On the other hand, the lower rail 40 includes the generally rectangular parallelepiped convex portion 46c in the concave groove 46b formed on the bottom wall 46, and the upper rail 20 includes the stopped portion 28 fitted into the concave groove 46b in the lower portion of the inner portion 22. As shown in FIG. 10A, the convex portion 46c stops the stopped portion 28 when the upper rail 20 slidably moves and reaches the front-end limit position. It is thereby possible to suppress the inner portion 22 of the upper rail 20 from being detached from the front end of the lower rail 40 to the outside of the inner space IS. That is, in the present embodiment, it is possible to suppress the inner portion 22 from being detached from each of the two ends of the lower rail 40 to the outside of the inner space IS. By providing the convex portion 46c, the rigidity of the lower rail 40 further improves.

In the present embodiment, both the convex portion 46c of the lower rail 40 and the stopped portion 28 of the upper rail 20 are made of the resin material. Owing to this, it is possible to suppress the generation of abnormal noise when the slidably moving upper rail 20 reaches the front-end limit position and the stopped portion 28 collides against the convex portion 46c (i.e., when the convex portion 46c stops the stopped portion 28).

### <<Locking mechanism in slide rail mechanism 4 according to the present embodiment»

A locking mechanism of the slide rail mechanism 4 according to the present embodiment will next be described.

In the present embodiment, the rotational arm 68 is arranged at the ordinary position in response to the urging force of the urging spring 110 while the operation lever LB is not operated, as already described. In a state in which the rotational arm 68 is arranged at the ordinary position, the rotational arm 68 keeps the lock members 64 engaged with the arm main bodies 68b and 68c each at the top dead center. While the lock members 64 are kept each at the top dead center, the locking gears 66 of each of the lock members 64 are in the state in which the locking gears 66 are engaged with the lower rail-side gears 52, that is, in the locked state as shown in FIG. 16(A).

As described above, the respective components of the unlocking mechanism 60 is configured to operate to switch the state of the upper rail 20 from the locked state to the unlocked state when the operation lever LB is operated, and to keep the state of the upper rail 20 to the locked state when the operation lever LB is not operated. In this sense, the unlocking mechanism 60 according to the present embodiment corresponds to a locking mechanism for keeping the state of the upper rail 20 to the locked state.

A configuration of the locking mechanism according to the present embodiment including the unlocking mechanism 60 described above will now be described.

As already described, the unlocking mechanism 60 includes the rotational shaft 62, the rotational arms 68, and the lock members 64. In the present embodiment, the rotational arms 68 and the lock members 64 are attached to the paired outer side surfaces 22a provided on the inner portion 22 of the upper rail 20, respectively. The unlocking mechanism 60 also includes the lock guide portions 22b formed on the respective outer side surfaces 22a of the inner portion 22 and guiding the locking members 64 in the upper to lower direction.

On the other hand, as shown in FIG. 6, the fixed rail-side engagement portions, i.e., the lower rail-side gears 52 engaged with the lock members 64 when the unlocking mechanism 60 makes the state of the upper rail 20 into the locked state are provided in the inner space IS of the lower rail 40. In the present embodiment, in particular, the lower rail-side gears 52 are provided on each of one end side (upper side) and the other end side (lower side) of the inner space IS in the upper to lower direction. The upper to lower direction corresponds to a cross direction crossing the slidable movement direction of the upper rail 20. Furthermore, in the present embodiment, the upper-side lower rail-side gears 52 and the lower-side lower rail-side gears 52 are provided on one end side and the other end side of the inner space IS in the width direction, respectively.

The two lock members 64, that is, the front-side lock member 64 and the back-side lock member 64 are provided on each unlocking mechanism 60 to correspond to the lower rail-side gears 52 provided on the upper side and lower side of the inner space IS, respectively. Moreover, the two lock guide portions 22b, that is, the front-side lock guide portion 22b and the back-side lock portion 22b are provided on each of the outer side surfaces 22a of the inner portion 22 of the upper rail 20 to correspond to the two lock members 64 being provided, respectively.

The slot groove 22c containing the front-side lock member 64 is formed in the front-side lock guide portion 22b, and the opening of the slot groove 22c is located upward. On the other hand, the slot groove 22c containing the back-side lock member 64 is formed in the back-side lock guide portion 22b, and the opening of the slot groove 22c is located downward.

Furthermore, of the rotational arm 68, the front-side lock member 64 is engaged with the arm main body 68b located further forward, and the back-side lock member 64 is engaged with the arm main body 68b located further backward.

According to the configuration described so far, when the rotational arm 68 rotates in the opposite direction to that during unlocking, the front-side lock member 64 moves upward, whereby the locking gears 66 formed in the upper end portion of the lock member 64 protrude upward. As a result, the locking gears 66 formed in the upper end portion of the front-side lock member 64 are engaged with the upper-side lower rail-side gears 52. That is, the front-side lock member 64 corresponds to a first lock member moving upward in the upper to lower direction so that the locking gears 66 are engaged with the upper-side lower rail-side gears 52 when the unlocking mechanism 60 makes the state of the upper rail 20 into the locked state. The locking gears 66 formed on the front-side lock member 64 correspond to first locking gears.

On the other hand, when the rotational arm 68 rotates in the opposite direction to that during unlocking, the back-side lock member 64 moves downward, whereby the locking gears 66 formed in the lower end portion of the lock member 64 protrude downward. As a result, the locking gears 66 formed in the lower end portion of the back-side lock member 64 are engaged with the lower-side lower rail-side gears 52. That is, the back-side lock member 64 corresponds to a second lock member moving downward in the upper to lower direction so that the locking gears 66 are engaged with the lower-side lower rail-side gears 52 when the unlocking mechanism 60 makes the state of the upper rail 20 into the locked state. The locking gears 66 formed on the back-side lock member 64 correspond to second locking gears.

In this way, in the slide rail mechanism 4 according to the present embodiment, both the lock member 64 corresponding to the first lock member and the lock member 64 corresponding to the second lock member are provided, and these lock members 64 are configured to move oppositely in the upper to lower direction so as to be engaged with the corresponding lower rail-side gears 52. As a result, it is possible to keep the state of the upper rail 20 to the locked state more stably as compared with a configuration in which any one of the first lock member and the second lock member is provided.

Furthermore, in the present embodiment, the rotational arm 68 rotating about the rotational shaft 62 crossing both the slidable movement direction and the upper to lower direction of the upper rail 20 is provided. The front-side lock member 64 corresponding to the first lock member is stopped on the arm main body 68b on one end side of the rotational arm 68, and the back-side lock member 64 corresponding to the second lock member is stopped on the arm main body 68c on the other end side thereof.

With the configuration described above, when the rotational arm 68 rotates about the rotational shaft 62, the front-side lock member 64 moves upward in the upper to lower direction and the back-side lock member 64 moves downward in the upper to lower direction. According to the present embodiment described above, the rotational arm 68 is provided for causing the front-side lock member 64 and the back-side lock member 64 to move oppositely in the upper to lower direction. As a result, to stably keep the locked state is achieved with a simpler structure.

Moreover, the front-side lock member 64 corresponding to the first lock member is contained in the slot groove 22c formed in the front-side lock guide portion 22b in a state in which the lock member 64 is movable in the upper to lower direction, and moves in the upper to lower direction while being guided by the front-side lock guide portion 22b. The front-side lock guide portion 22b corresponds to a first guide portion, and the slot groove 22c formed in the front-side lock guide portion 22b corresponds to a first guide groove.

Likewise, the back-side lock member 64 corresponding to the second lock member is contained in the slot groove 22c formed in the back-side lock guide portion 22b in a state in which the lock member 64 is movable in the upper to lower direction, and moves in the upper to lower direction while being guided by the back-side lock guide portion 22b. The back-side lock guide portion 22b corresponds to a second guide portion, and the slot groove 22c formed in the back-side lock guide portion 22b corresponds to a second guide groove.

As described above, the front-side lock member 64 and the back-side lock member 64 move while the movement directions are restricted to the upper to lower direction by the corresponding lock guide portions 22b, respectively. That is, in the present embodiment, it is ensured that each lock member 64 moves in the upper to lower direction by the lock guide portion 22b. As a result, it is ensured that the locking gears 66 are engaged with the lower rail-side gears 52 during locking, and that the locking gears 66 are disengaged from the lower rail-side gears 52 during unlocking.

Furthermore, in the present embodiment, the front-side lock guide portion 22b includes the paired slot groove forming portions 30 aligned in the front to back direction, the slot groove 22c, and the lock-member stopper portion 32 coupling the slot groove forming portions 30 with each other on the lower end of the slot groove 22c. The slot groove forming portions 30 provided in the front-side lock guide portion 22b correspond to first groove forming portions, and the lock-member stopper portion 32 provided in the front-side lock guide portion 22b corresponds to a first lock-member stopper portion. When the front-side lock member 64 moves in the slot groove 22c and reaches a position of a lower end in the movement range, the lock-member stopper portion 32 provided in the front-side lock guide portion 22b stops the front-side lock member 64 and restricts the front-side lock member 64 from further moving downward.

Likewise, the back-side guide portion 22b includes the paired slot groove forming portions 30, the slot groove 22c, and the lock-member stopper portion 32 coupling the slot groove forming portions 30 with each other on the upper end of the slot groove 22c. The slot groove forming portions 30 and the lock-member stopper portion 32 provided in the back-side guide portion 22b correspond to second guide groove forming portions and a second lock-member stopper portion. When the back-side lock member 64 moves to a position of an upper end in the movement range in the slot groove 22c, the lock-member stopper portion 32 provided in the back-side lock guide portion 22b stops the front-side lock member 64 and restricts the back-side lock member 64 from further moving upward.

As described above, the movement limit position is set for each of the front-side lock member 64 and the back-side lock member 64 when moving in the direction away from the lower rail-side gears 52, so that the lock-member stopper portion 32 stops the lock member 64 and restricts the lock member 64 from further moving in the same direction when the lock member 64 reaches the movement limit position. It is possible to reduce the operation time by restricting the movement of the lock member 64 to the limit position as compared with a case where the movement is not restricted.

Moreover, in the present embodiment, the unlocking mechanism 60 is attached to each of the paired outer side surfaces 22a provided on the inner portion 22. That is, the front-side lock member 64 and the back-side lock member 64 are provided for the respective outer side surfaces 22a of the inner portion 22 and attached to the respective outer side surface 22a.

The lower rail-side gears 52 provided upward of the inner space IS of the lower rail 40 are arranged both at positions upward of the front-side lock member 64 attached to one of the outer side surfaces 22a and at positions upward of the front-side lock member 64 attached to the other outer side surface 22a. Likewise, the lower rail-side gears 52 provided downward of the inner space IS are arranged both at positions downward of the lower-side lock member 64 attached to one of the outer side surfaces 22a and at positions downward of the lower-side lock member 64 attached to the other outer side surface 22a.

As described above, in the present embodiment, the front-side lock member 64 and the back-side lock member 64 are engaged with the lower rail-side gears 53 on both sides of the inner portion 22 in the width direction. By so configuring, even if inner portion 22 is inclined so that one end (the other end) of the inner potion 22 in the width direction is located downward of the other end (one end) in the width direction, the front-side lock member 64 and the back-side lock member 64 are engaged with the lower rail-side gears 52 at least on one end (the other end) of the inner potion 22 in the width direction. It is, therefore, possible to stably keep the state of the movable rail to the locked state even if the inner portion 22 is inclined.

### Reference Numerals

- S: vehicle seat
- S1: seatback
- S2: seat cushion
- S3: headrest
- 1: seatback frame
- 2: seat cushion frame
- 1a, 2a, 3a: cushion pad
- 1b, 2b, 3b: skin material
- HP: headrest pillar
- 4: slide rail mechanism
- 5: height adjustment mechanism
- 5a: link
- 20: upper rail
- 22: inner portion
- 22a: outer side surface
- 22b: lock guide portion
- 22c: slot groove
- 22d: spring retaining notch
- 22e: spring stopper portion
- 22g: protruding portion
- 24: outer portion
- 24a: upper-rail-side engagement portion
- 24b: link support portion
- 24c: spring stopper portion
- 24d: opposed region
- 24e: first extension region
- 24f: second extension region
- 24g: third extension region
- 26: upright portion
- 28: stopped portion
- 30: slot groove forming portion
- 32: lock member stopper portion
- 34: base portion
- 40: lower rail
- 42: upper wall
- 42a: lower rail-side engagement portion
- 42b: engagement groove
- 42s: inner surface
- 42t: outer surface
- 44: sidewall
- 44a: bulging portion
- 44s: inner surface
- 44t: outer surface
- 46: bottom wall
- 46a: stepped portion
- 46b: concave groove
- 46c: convex portion
- 46s: inner surface
- 48: slit
- 50: gear forming portion
- 52: lower rail-side gear
- 54: stopper protrusion
- 60: unlocking mechanism
- 62: rotational shaft
- 64: lock member
- 64a: engagement protrusion
- 66: locking gear
- 68: rotational arm
- 68a: shaft attachment portion
- 68b, 68c: arm main body
- 68d: through-hole
- 68e: cylindrical protrusion
- 80: link member
- 83: lever attachment portion
- 82a: attachment hole
- 82b: spring retaining notch
- 84: link main body
- 84a: abutment portion
- 86: coupling body
- 100: fastening pin
- 102: top portion
- 110: urging spring
- 120: urging spring
- LB: operation lever
- LBa: attachment-side end portion
- LBb: notch
- IS: inner space
- UB: spiral spring

## Claims

1. A slide rail mechanism comprising:
a hollow-shaped fixed rail fixed to a vehicle main body; and
a movable rail slidably moving along the fixed rail in a state in which at least a portion of the movable rail is inserted into an inner space of the fixed rail, wherein the portion of the movable rail inserted into the inner space comprises a region including a solid or closed cross-section in a slidable movement direction of the movable rail, a normal direction of the solid or closed cross-section being the slidable movement direction.

2. The slide rail mechanism according to claim 1, wherein
the fixed rail comprises an upper wall including a slit ranging from one end to an other end of the fixed rail along the slidable movement direction,
a portion of the movable rail is arranged at a position upward of the slit and outside of the inner space,
the portion of the movable rail arranged at the position upward of the slit and outside of the inner space comprises
an opposed region opposed to an upper surface of the upper wall in an upper to lower direction; and
a first extension region extending downward at a position adjacent to an end portion of the opposed region in a cross direction crossing the slidable movement direction, and
the first extension region is opposed to an end surface of the upper wall in the cross direction, and restricts the upper wall from being deformed so that the slit is wider in the cross direction.

3. The slide rail mechanism according to claim 2, wherein
the first extension region extends up to a lower end position of the upper wall, and
the portion of the movable rail arranged at the position upward of the slit and outside of the inner space further comprises a second extension region extending toward the fixed rail in the cross direction at a position adjacent to a lower end portion of the first extension region.

4. The slide rail mechanism according to claim 3, wherein
a concave portion located in an end portion of a lower surface of the upper wall in the cross direction is provided in the lower surface of the upper wall, the concave portion being recessed upward,
the portion of the movable rail arranged at the position upward of the slit and outside of the inner space further comprises a third extension region extending upward toward the concave portion at a position adjacent to an end portion of the second extension region opposite to a side on which the first extension region is located in the cross direction, and
an upper end portion of the third extension region is fitted into the concave portion.

5. The slide rail mechanism according to claim 4, wherein
the fixed rail comprises a bulging portion bulging outward from an end surface of the fixed rail in the cross direction, and
the bulging portion is opposed to the second extension region in the upper to lower direction, and restricts the end portion of the second extension region on a side on which the third extension region is located in the cross direction from moving downward.

6. The slide rail mechanism according to claim 5, wherein
the first extension region, the second extension region, and the third extension region of the movable rail are made of a resin material, and
a portion of the upper wall opposed to any one of the first extension region, the second extension region, and the third extension region is made of a resin material.

7. The slide rail mechanism according to any one of claims 2 to 6, wherein
the portion of the movable rail inserted into the inner space comprises a protruding portion that is located at a position downward of the slit, and that protrudes outward of an edge of the slit in the cross direction.

8. The slide rail mechanism according to claim 7, wherein
the protruding portion is located right under the lower surface of the upper wall, and
an upper end surface of the protruding portion is along a range of the lower surface adjacent to the slit.

9. The slide rail mechanism according to any one of claims 2 to 8, comprising:
a fixed rail-side gear provided in the inner space, and formed to make a state of the movable rail into a state in which the movable rail is immovable relatively to the fixed rail; and
a locking gear attached to the movable rail, and engaged with the fixed rail-side gear by moving in the upper to lower direction, wherein
a combination of the fixed rail-side gear and the locking gear is arranged at a position on each side of the portion of the movable rail that is inserted into the inner space.

10. The slide rail mechanism according to claim 1, comprising:
a locking mechanism attached to the movable rail, and keeping a state of the movable rail to a state in which the movable rail is immovable relatively to the fixed rail; and
a fixed rail-side engagement portion provided in the inner space, and engaged with the locking mechanism when the locking mechanism makes the state of the movable rail to the state in which the movable rail is immovable relatively to the fixed rail, wherein
the fixed rail-side engagement portion is provided on each of one end side and an other end side of the inner space in a cross direction crossing the slidable movement direction,
the locking mechanism comprises
a first lock member engaged with the fixed rail-side engagement portion provided on the one end side of the inner space in the cross direction; and
a second lock member engaged with the fixed rail-side engagement portion provided on the other end side of the inner space in the cross direction, and
the first lock member and the second lock member move in opposite directions in the cross direction so that each of the first lock member and the second lock member is engaged with the corresponding fixed rail-side engagement portion.

11. The slide rail mechanism according to claim 10, wherein
the fixed rail-side engagement portion is a plurality of fixed rail-side gears provided along the slidable movement direction,
a first locking gear engaged with the fixed rail-side gear is provided in an upper end portion of the first lock member,
a second locking gear engaged with the fixed rail-side gear is provided in a lower end portion of the second lock member,
the first lock member moves upward in an upper to lower direction so that the first locking gear is engaged with the fixed rail-side gear provided upward of the inner space and the second lock member moves downward in the upper to lower direction so that the second locking gear is engaged with the fixed rail-side gear provided downward of the inner space when the locking mechanism makes a state of the movable rail into a state in which the movable rail is immovable relatively to the fixed rail.

12. The slide rail mechanism according to claim 11, wherein
the locking mechanism further comprises a rotational arm rotating about a rotational shaft crossing both the slidable movement direction and the upper to lower direction,
a central portion of the rotational arm is supported by the rotational shaft,
one end portion of the rotational arm is engaged with the first lock member,
an other end portion of the rotational arm is engaged with the second lock member, and
by allowing the rotational arm to rotate about the rotational shaft, the first lock member moves upward in the upper to lower direction and the second lock member moves downward in the upper to lower direction.

13. The slide rail mechanism according to claim 12, comprising:
a first guide portion guiding the first lock member to restrict a movement direction of the first lock member to the upper to lower direction during rotation of the rotational arm; and
a second guide portion guiding the second lock member to restrict a movement direction of the second lock member to the upper to lower direction during the rotation of the rotational arm.

14. The slide rail mechanism according to claim 13, wherein the first guide portion and the second guide portion are provided on respective outer side surfaces of the movable rail, and integrated with the movable rail.

15. The slide rail mechanism according to claim 13 or 14, wherein
the first guide portion comprises
a first guide groove storing therein the first lock member in a state in which the first lock member is movable in the upper to lower direction; and
a first lock-member stopper portion arranged on a lower end of the first guide groove, and stopping the first lock member when the first lock member reaches a lower end position in a movement range, and
the second guide portion comprises
a second guide groove storing therein the second lock member in a state in which the second lock member is movable in the upper to lower direction; and
a second lock-member stopper portion arranged on an upper end of the second guide groove, and stopping the second lock member when the second lock member reaches an upper end position in the movement range.

16. The slide rail mechanism according to claim 15, wherein
the first guide portion comprises
a pair of first guide groove forming portions aligned at an interval;
the first guide groove formed by a gap between the pair of first guide groove forming portions; and
the first lock-member stopper portion coupling the pair of first guide groove forming portions with each other on the lower end of the first guide groove, and
the second guide portion comprises
a pair of second guide groove forming portions aligned at an interval;
the second guide groove formed by a gap between the pair of second guide groove forming portions; and
the second lock-member stopper portion coupling the pair of second guide groove forming portions on the upper end of the second guide groove.

17. The slide rail mechanism according to claim 15 or 16 , wherein the first lock member, the second lock member, the first guide portion, the second guide portion, and the movable rail are made of a resin material.

18. The slide rail mechanism according to claim 17, wherein the first lock-member stopper portion and the second lock-member stopper portion are both made of a resin material.

19. The slide rail mechanism according to any one of claims 11 to 18, wherein
the movable rail comprises a pair of outer side surfaces,
the first lock member and the second lock member are provided at each of the outer side surfaces and attached to the outer side surfaces,
the fixed rail-side gears provided upward of the inner space are arranged both at positions upward of the first lock member attached to one of the outer side surfaces and at positions upward of the first lock member attached to an other outer side surface, and
the fixed rail-side gears provided downward of the inner space are arranged both at positions downward of the second lock member attached to one of the outer side surfaces and at positions downward of the second lock member attached to the other outer side surface.

20. The slide rail mechanism according to claim 1, wherein
one end of the fixed rail is an open end,
the slide rail mechanism further comprises:
an unlocking mechanism for switching a state of the movable rail from a state in which the movable rail is immovable relatively to the fixed rail to a state in which the movable rail is movable relatively to the fixed rail;
a driving member assembled into the movable rail, and driving the unlocking mechanism; and
a fastening member fastening the driving member to the movable rail,
a restriction portion for restricting the portion of the movable rail inserted into the inner space from being detached from the one end side to outside of the inner space is provided in the inner space of the fixed rail, and
the restriction portion is integrated with the fixed rail, and stops the fastening member in the inner space when the movable rail reaches a position of one end in a slidable movement range.

21. The slide rail mechanism according to claim 20, wherein
the fixed rail comprises a pair of sidewalls located on both sides of the inner space, respectively,
the restriction portion is located between at least one sidewall out of the pair of the sidewalls and the portion of the movable rail inserted into the inner space, and
the fastening member is attached to a surface of the movable rail on a side opposed to the restriction portion.

22. The slide rail mechanism according to claim 21, wherein
the fixed rail comprises an adjacent wall adjacent to the at least one sidewall in a state of crossing the at least one sidewall, and
the restriction portion is formed integrally with the fixed rail, and located in a corner formed by the at least one sidewall and the adjacent wall.

23. The slide rail mechanism according to any one of claims 20 to 22, wherein
a plurality of fixed rail-side gears aligned along the slidable movement direction is provided in the inner space of the fixed rail,
the unlocking mechanism comprises a plurality of movable rail-side gears aligned along the slidable movement direction near the movable rail and engaged with the fixed rail-side gears,
the state of the movable rail is switched from the state in which the movable rail is immovable relatively to the fixed rail to the state in which the movable rail is movable relatively to the fixed rail when the movable rail-side gears are disengaged from the fixed rail-side gears, and
the restriction portion is provided to extend toward the one end along the slidable movement direction.

24. The slide rail mechanism according to any one of claims 20 to 23, wherein
both ends of the fixed rail are open ends,
an other restriction portion restricting the portion of the movable rail inserted into the inner space from being detached from an other end side of the fixed rail to the outside of the inner space,
the other restriction portion is a convex portion provided at a position closer to the other end side than the restriction portion in the inner space, and
the movable rail comprises a stopped portion stopped by the convex portion in the inner space when the movable rail reaches a position of an other end in the slidable movement range.

25. The slide rail mechanism according to claim 24, wherein both of the convex portion and the stopped portion are made of a resin material.

26. The slide rail mechanism according to any one of claims 20 to 25, wherein both of the restriction portion and the fastening portion are made of a resin material.
